(19) Europäisches Patentamt
European Patent Office
Office européen des brevets

(11) **EP 1 932 307 B1**

(12) **EUROPÄISCHE PATENTSCHRIFT**

(45) Veröffentlichungstag und Bekanntmachung des Hinweises auf die Patenterteilung:
**07.01.2009 Patentblatt 2009/02**

(21) Anmeldenummer: **06805910.4**

(22) Anmeldetag: **27.09.2006**

(51) Int Cl.:
**H04L 25/06** (2006.01)     **H04L 1/00** (2006.01)

(86) Internationale Anmeldenummer:
**PCT/EP2006/009390**

(87) Internationale Veröffentlichungsnummer:
**WO 2007/039205 (12.04.2007 Gazette 2007/15)**

(54) **VERFAHREN UND VORRICHTUNG ZUR ERMITTLUNG EINER ZUVERLÄSSIGKEITSINFORMATION ÜBER EIN EMPFANGENES BIT MITTELS KARTESISCHER METRIKEN**

METHOD AND DEVICE FOR DETERMINING AN ITEM OF RELIABILITY INFORMATION CONCERNING A RECEIVED BIT BY USING CARTESIAN METRICS

PROCEDE ET DISPOSITIF DE DETECTION D'UNE INFORMATION DE FIABILITE PAR UN BIT REÇU A L'AIDE D'UNE METRIQUE CARTESIENNE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.10.2005 DE 102005047984**
**10.11.2005 DE 102005053701**

(43) Veröffentlichungstag der Anmeldung:
**18.06.2008 Patentblatt 2008/25**

(73) Patentinhaber: **Rohde & Schwarz GmbH & Co. KG 81671 München (DE)**

(72) Erfinder:
• **SCHAEFER, Andrew**
**81373 München (DE)**
• **VOLYANSKIY, Mikhail**
**86150 Augsburg (DE)**

(74) Vertreter: **Körfer, Thomas**
**Mitscherlich & Partner**
**Patent- und Rechtsanwälte**
**Postfach 33 06 09**
**80066 München (DE)**

(56) Entgegenhaltungen:
**EP-A- 0 998 045**     **US-B1- 6 807 238**

**EP 1 932 307 B1**

## Beschreibung

Die Erfindung betrifft ein Verfahren und eine Vorrichtung zur Ermittlung einer Zuverlässigkeitsinformationen über ein empfangenes Bit mittels kartesischer Metriken.

In einem digitalen Übertragungssystem werden zu übertragende Symbole, bestehend aus einer bestimmten Anzahl von Bits, unter Anwendung einer bestimmten Modulation auf einen analogen Träger moduliert. Aufgrund von Störungen auf dem Übertragungskanal - beispielsweise Rauschen - entsprechen die empfangenen Symbole nach ihrer Demodulation in allgemeinen nicht den gesendeten Symbolen.

In einem dem Demodulator nachfolgenden Detektor wird für das empfangene Symbol und für jedes Referenz-Symbol aus dem Symbolalphabet der verwendeten Modulation jeweils eine so genannte Symbol-Wahrscheinlichkeit ermittelt, die die Wahrscheinlichkeit für die Übereinstimmung des empfangenen Symbols mit dem gesendeten Symbol jeweils entsprechenden Referenz-Symbol quantifiziert. Aus dieser Symbol-Wahrscheinlichkeit ermittelt der Detektor anschließend für jedes Bit dieses empfangenen Symbols eine so genannte Bit-Wahrscheinlichkeit, für die üblicherweise die so genannte Log-Likelihood-Ratio (LLR) herangezogen wird, die als das logarithmierte Verhältnis der Wahrscheinlichkeit, dass das empfangene Bit einen nicht-aktivierten Zustand (logisch "0") aufweist, zur Wahrscheinlichkeit, daß das empfangene Bit einen aktivierten Zustand (logisch "1") aufweist, definiert ist.

Diese Bit-Wahrscheinlichkeit für jedes empfangene Bit wird in einem nachfolgenden Dekodierer zur Identifizierung von Übertragungsfehlern und darauf aufbauend zu Korrekturen derselben verwendet. Hierbei finden mathematische Verfahren zur Kanalkodierung bzw. -dekodierung Anwendung, auf die im folgenden, so weit sie für das Verständnis der Detektion bzw. des Detektors erforderlich sind, noch im Detail eingegangen wird.

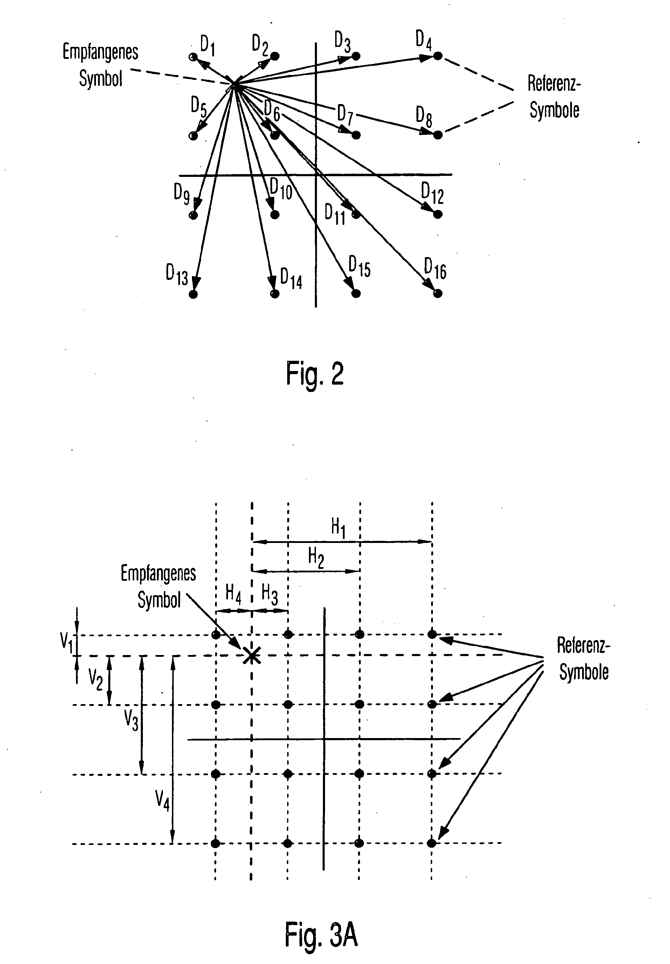

Zur Bestimmung der Symbol-Wahrscheinlichkeit werden stochastische Modelle, die das Störverhalten des Übertragungskanals auf das jeweils zu übertragende Bit beschreiben, angewendet. Die Symbol-Wahrscheinlichkeit des empfangenen Symbols für jedes Referenz-Symbol aus dem Symbolalphabet der verwendeten Modulation ist hierbei eine Wahrscheinlichkeitsfunktion, die eine Abhängigkeit von der Metrik zwischen dem empfangenen Symbol und dem jeweiligen Referenz-Symbol im Konstellationsdiagramm aufweist. Im Falle eines Übertragungskanals mit weißen Rauschen, das einer Gauß-Verteilung genügt (AWGN-Kanal: Additive White Gaussian Noise), entspricht die Metrik der quadratischen euklidischen Distanz zwischen dem Punkt des empfangenen Symbols und dem Punkt des jeweiligen Referenz-Symbols im Konstellationsdiagramm gemäß Fig. 2.

Bei Verwendung einer Modulation mit einem mächtigen Symbolalphabet - beispielsweise 64QAM mit insgesamt 64 Symbolen - ist bei jedem empfangenen Symbol eine Vielzahl von Symbol-Wahrscheinlichkeiten zu ermitteln. Hinzukommt, dass die Berechnungen der jeweiligen Symbol-Wahrscheinlichkeit je nach verwendeten Kanalmodell u.U. auf einem Echtzeit-Rechner zeitaufwändig zu berechnende Exponential-Funktionen durchzuführen sind. Zur Ermittlung der Bit-Wahrscheinlichkeit ist wiederum für jedes Bit des empfangenen Symbols die Vielzahl von ermittelten Symbol-Wahrscheinlichkeiten additiv zu verknüpfen sowie anschließend auf einem Echtzeit-Rechner zeitaufwändig zu logarithmieren.

Während zur Berechnungsvereinfachung der Exponential- bzw. Logarithmusfunktionen aus der Kanalkodierung stammende Ansätze - Berechnung in der Log-Ebene, Max-Log-Näherung - zum Einsatz kommen, auf die im Detail noch weiter unten eingegangen wird, sind trotzdem zur Bestimmung der einzelnen Symbol-Wahrscheinlichkeiten und der darauf aufbauenden Bit-Wahrscheinlichkeiten insbesondere bei Modulationsverfahren mit mächtigem Symbolalphabet nachteilig eine Vielzahl von mathematischen Operationen durchzuführen.

Die Patentanmeldung US 6 807 238 B1 D1 offenbart die Berechnung der Log-Likelihood-Ratio für eine 8-PSK Konstellation, die naturgemäß eine nicht-quadratische Zuordnung der einzelnen Referenz-Symbole im Konstellationsdiagramm aufweist. Hierbei wird für jedes Symbol des in der 8-PSK Modulation verwendeten Symbolalphabets eine Symbol-Wahrscheinlichkeit mit eigener vertikaler und horizontaler Komponente ermittelt.

Aus der Patentanmeldung EP-A 0 998 045 ist die Bestimmung einer Log-Likelihood-Ratio für Symbole von quadratischen, Gray-kodierten QAM-Konstellationen bekannt. Hierbei erfolgt die Bit-Zuordnung für die Referenzsymbole derart, daß die Hälfte der Bits in jeder Spalte bzw. Zeile des Konstellationsdiagramms identisch sind.

Aufgabe der Erfindung ist es deshalb, ein Verfahren und eine Vorrichtung zur Ermittlung einer Zuverlässigkeitsinformation - Bit-Wahrscheinlichkeit - eines empfangenen Bits in einem modulierten Symbol im Hinblick auf die Echtzeitanforderungen des digitalen Übertragungssystems zu optimieren.

Die Aufgabe der Erfindung wird durch die Merkmale der erfindungsgemäßen Verfahren zur Ermittlung einer Zuverlässigkeitsinformation über ein empfangenes Bit gemäß Anspruchen 1 und 2, durch die Merkmale der erfindungsgemäßen Vorrichtung zur Ermittlung einer Zuverlässigkeitsinformation über ein empfangenes Bit gemäß Anspruch 17 und durch die Merkmale des erfindungsgemäßen iterativen Dekodierers gemäß Anspruch 18 gelöst. Vorteilhafte Weiterbildungen der Erfindung sind in den abhängigen Ansprüchen aufgeführt.

Als wesentliche Voraussetzung des erfindungsgemäßen Verfahrens wird ein Übertragungskanal angenommen, bei dem die in Symbol-Wahrscheinlichkeiten enthaltene Metrik in ihre beiden kartesischen Komponenten - eine horizontale Metrik und eine vertikalen Metrik - zerlegt werden kann, wie es beispielsweise bei einem Übertragungskanal mit einem Gauß-verteilten weißen Rauschen (Additive White Gaussian Noise (AWGN-Kanal)) der Fall ist. Auf diese Weise wird die Berechnung der einzelnen Symbol-Wahrscheinlichkeiten, die nach dem Stand der Technik auf der Basis der Ermittlung der quadratischen euklidischen Distanz zwischen den Koordinaten des Empfangs-Symbols und des jeweiligen Referenz-Symbols im Konstellationsdiagramm erfolgt, erfindungsgemäß in die Berechnung einer "Horizontal-Komponente" und einer "Vertikal-Komponente" der Symbol-Wahrscheinlichkeit aufgetrennt. Für die Berechnung der einzelnen Symbol-Wahrscheinlichkeiten, die nach dem Stand der Technik einer der Anzahl von Referenz-Symbolen des in der Modulation verwendeten Symbolalphabets entsprechenden Anzahl von Metrik- und darauf aufbauend Symbol-Wahrscheinlichkeits-Berechnungen erfordert, sind bei einer quadratischen Zuordnung der einzelnen Referenz-Symbole im Konstellationsdiagramm - Anordnung der Referenz-Symbole in einzelnen Zeilen und Spalten - und einer erfindungsgemäßen Zerlegung der Symbol-Wahrscheinlichkeit in eine "Horizontal-Komponente" und eine "Vertikal-Komponente" nur noch eine der Zeilenanzahl im Konstellationsdiagramm entsprechende Anzahl von "Vertikal-Komponenten" der Symbol-Wahrscheinlichkeit und eine der Spaltenanzahl im Konstellationsdiagramm entsprechenden Anzahl von "Horizontal-Komponenten" der Symbol-Wahrscheinlichkeit zu ermitteln.

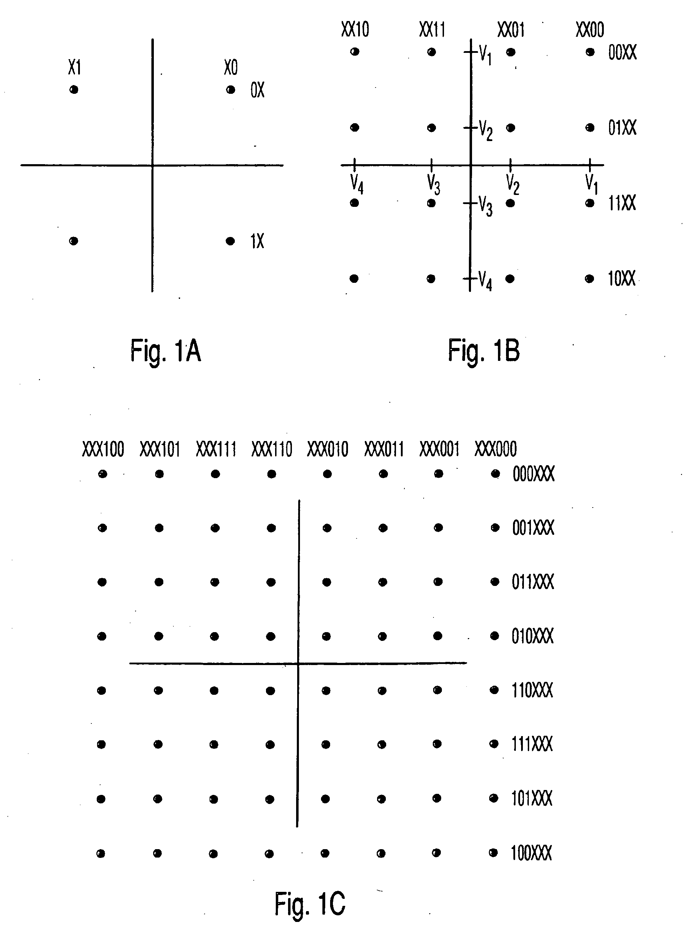

Als weitere wesentliche Voraussetzung des erfindungsgemäßen Verfahrens ist die Verwendung einer quadratischen Zuordnung der Referenz-Symbole der verwendeten Modulation im Konstellationsdiagramm - beispielsweise einer Gray-Bit-Zuordnung nach Fig. 1A, 1B und 1C für die QPSK-, 16QAM-und 64QAM-Modulation - anzusehen. Bei einer Gray-Bit-Zuordnung weisen die einzelnen Referenz-Symbole einer Zeile oder einer Spalte in der Hälfte der Bits die identische Bitbelegung auf. Somit ist für die Bestimmung der Bit-Wahrscheinlichkeit als LLR-Wert nur die mit der Anzahl von Referenz-Symbolen je Spalte multiplizierte "Horizontal-Komponente" der Symbol-Wahrscheinlichkeit derjenigen Spalten oder nur die mit der Anzahl von Referenz-Symbolen je Zeile multiplizierte "Vertikal-Komponente" der Symbol-Wahrscheinlichkeit derjenigen Zeilen heranzuziehen, deren Referenz-Symbole an der jeweiligen Bitposition ein aktiviertes beziehungsweise ein nicht-aktiviertes Bit aufweisen. Alternativ zur Gray-Bit-Zuordnung können auch andere Zuordnungen verwendet werden, bei denen die einzelnen Referenz-Symbole einer Zeile oder einer Spalte in der Hälfte der Bits die identische Bitbelegung aufweisen.

Somit läßt sich auch auf diese Weise gegenüber dem Stand der Technik, bei dem für die LLR-Berechnung die Symbol-Wahrscheinlichkeiten der Hälfte von Referenz-Symbolen des in der Modulation verwendeten Symbolalphabets, die an der entsprechenden Bitposition ein aktiviertes Bit aufweisen, miteinander addiert werden und anschließend von den miteinander addierten Symbol-Wahrscheinlichkeiten der anderen Hälfte von Referenz-Symbolen, die an der entsprechenden Bitposition eine nicht-aktiviertes Bit aufweisen, subtrahiert werden, die Anzahl von durchzuführenden Operationen deutlich reduzieren.

Die Verwendung einer Gray-Bit-Zuordnung und äqivalenter Zuordnungen im Konstellationsdiagramm bewirkt eine minimale Bit Fehlerwahrscheinlichkeit, da sich jeweils benachbarte Referenz-Symbole im Konstellationsdiagramm jeweils nur in einer Bitposition unterscheiden. Insofern kann ein derartiger erfindungsgemäßer Detektor auch als Teil-Dekodierer eines iterativen Dekodierers (Turbo-Dekodierer) verwendet werden.

Da bei einem aus zwei Teil-Dekodierern bestehenden, iterativen Dekodierer die Zuverlässigkeitsinformation über ein Bit in einem empfangenen Symbol durch Übergabe der im jeweiligen Teil-Dekodierer ermittelten Bit-Wahrscheinlichkeit an den jeweils anderen Teil-Dekodierer erfolgt, der in einem weiteren Iterationsschritt aus dem empfangenen Bit und der vom jeweils anderen Teil-Dekodierer übermittelten a-priori-Bit-Wahrscheinlichkeit eine optimierte Bit-Wahrscheinlichkeit ermittelt, kann mit einem derartigen iterativen Dekodierer die Bitfehlerwahrscheinlichkeit deutlich minimiert werden und in Richtung der Shannon-Grenze bewegt werden.

Die vom jeweils anderen Teil-Dekodierer ermittelte logarithmierte Bit-Wahrscheinlichkeit des einzelnen Bits im empfangenen Symbol dient als logarithmierte a-priori-Bit-Wahrscheinlichkeit für den erfindungsgemäßen Detektor.

Aus den einzelnen logarithmierten a-priori-Bit-Wahrscheinlichkeiten der zum empfangenen Symbol gehörigen Bits wird nicht wie beim Stand der Techniker für jedes Symbol des in der Modulation verwendeten Symbolalphabets eine logarithmierte a-priori-Symbol-Wahrscheinlichkeit ermittelt, sondern aufgrund der oben erwähnten Bitidentität in der Hälfte der Bitpositionen der Referenz-Symbole einer Zeile oder einer Spalte im Konstellationsdiagramm erfindungsgemäß nur eine für die Referenz-Symbole der ganzen Zeile geltende logarithmierte vertikale a-priori-Symbol-Wahrscheinlichkeit und nur eine für die Referenz-Symbolen der ganzen Spalte geltende logarithmierte horizontale a-priori-Symbol-Wahrscheinlichkeit ermittelt. Die jeweilige logarithmierte vertikalen a-priori-Symbol-Wahrscheinlichkeit wird mit der erfindungsgemäßen auf der vertikalen Metrik basierenden vertikalen logarithmierten Symbol-Wahrscheinllichkeit des empfangenen Symbols zur jeweiligen Zeile von Referenz-Symbolen im Konstellationsdiagramm addiert. Analog erfolgt die Addition der jeweiligen logarithmieren horizontalen a-priori-Symbol-Wahrscheinlichkeit mit der erfindungsgemäßen auf der horizontalen Metrik basierenden horizontalen logarithmierten Symbol-Wahrscheinlichkeit des empfangenen Bits zur jeweiligen Spalte von Referenz-Symbolen im Konstellationsdiagramm.

Bei iterativen Dekodierern werden zwischen den einzelnen Teil-Dekodierern nur die sogenannten extrinischen logarithmierten Bit-Wahrscheinlichkeiten weitergereicht. Zur Ermittlung der exzentrischen logarithmierten Bit-Wahrscheinlichkeit wird die von der erfindungsgemäßen Vorrichtung bzw. vom erfindungsgemäßen Verfahren ermittelte logarithmierte Bit-Wahrscheinlichkeit durch Subtraktion um die vom anderen Teil-Dekodierer erhaltene logarithmierte a-priori-Bit-Wahrscheinlichkeit bereinigt.

Die beiden Ausführungsbeispiele des erfindungsgemäßen Verfahrens und der erfindungsgemäßen Vorrichtung zur Ermittlung einer Zuverlässigkeitsinformation über ein empfangenes Bit und der erfindungsgemäße iterative Dekodierer werden im folgenden näher erläutert. In der Zeichnung zeigen:

Fig. 1A,1B,1C  ein Konstellationsdiagramm für eine QPSK-, eine 16QAM- und eine 64QAM- Modulation,

Fig. 2  ein Konstellationsdiagramm mit eukli- dischen Metriken nach dem Stand der Technik,

Fig. 3A, 3B  ein Konstellationsdiagramm mit erfin- dungsgemäßen horizontalen und vertikalen Metriken,

Fig. 4  ein Konstellationsdiagramm mit zu addie- renden Symbol-Wahrscheinlichkeiten zur erfindungs- gemäßen Ermittlung der Bit- Wahrscheinlichkeit,

Fig. 5  ein Konstellationsdiagramm mit horizon- talen und vertikalen a-priori-Symbol- Wahrscheinlich- keiten,

Fig. 6  ein Konstellationsdiagramm mit hori- zontalen Symbol-Wahrscheinlichkeiten und horizontalen a- priori-Symbol-Wahrschein- lichkeiten bzw. mit vertikalen Symbol- Wahrscheinlichkeiten und ver- tikalen a- priori-Symbol-Wahrscheinlichkeiten,

Fig. 7  eine Tabelle mit logarithmierten Symbol- Wahrscheinlichkeiten bei voller Metrik,

Fig. 8  eine Tabelle mit logarithmierten Symbol- Wahrscheinlichkeiten bei symmetrischer Metrik,

Fig. 9  eine Tabelle mit horizontalen und ver- tikalen a-priori-Symbol-Wahrscheinlich- keiten bei voller und symmetrischer Metrik,

Fig. 10A, 10B, 10C  eine Tabelle mit optimierten horizon- talen und vertikalen Metriken,

Fig. 11A, 11B  ein Flußdiagramm einer ersten und zweiten Ausführungsform des erfindungsgemäßen Verfahrens zur Ermittlung einer Zuverläs- sigkeitsinformation über ein empfangenes Bit,

Fig. 12A, 12B  ein Blockschaltbild einer ersten und zweiten Ausführungsform der erfin- dungsgemäßen Vorrichtung zur Ermittlung einer Zuverlässigkeitsinformation über ein empfangenes Bit und

Fig. 13  ein Blockschaltbild eines erfindungs- gemäßen iterativen Dekodierers.

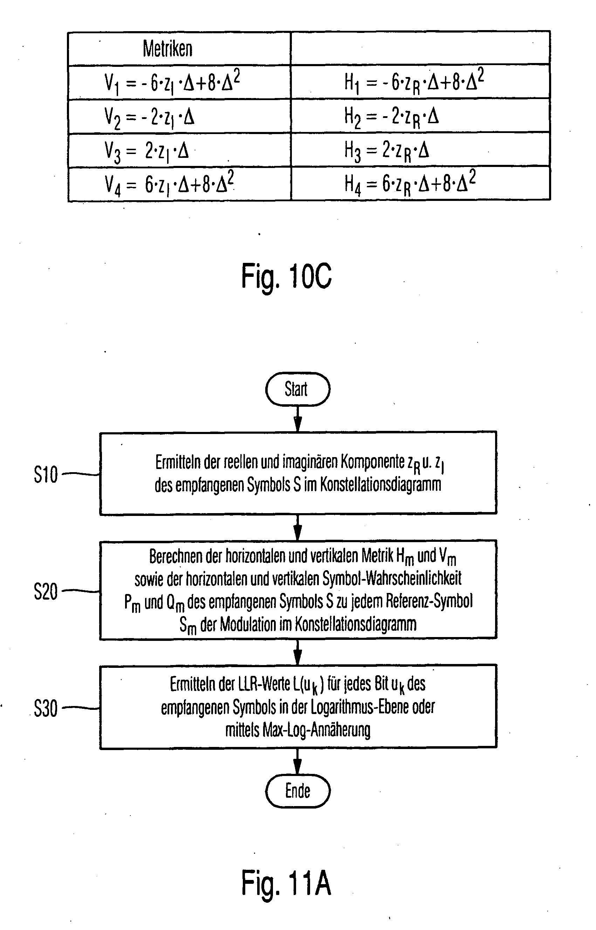

Bevor das erfindungsgemäße Verfahren beziehungsweise die erfindungsgemäße Vorrichtung zur Ermittlung einer Zuverlässigkeitsinformation über ein empfangenes Bit an Hand der Figuren 11A, 11B und 12A, 12B sowie 13 beschrieben werden, werden im folgenden die dafür erforderlichen mathematischen Grundlagen im Detail erläutert.

In der Kanalkodierung wird die Zuverlässigkeitsinformation über den logischen Zustand eines Bits $u_k$ an der Bitposition $k$ eines empfangenen Symbols $S_m$ mit der sogenannten Log-Likelihood-Ratio (LLR) $L(u_k)$ gemäß Gleichung (1) beschrieben, die das logarithmierte Verhältnis der Wahrscheinlichkeit $p(u_k=0)$, daß das Bit $u_k$ an der Bitposition $k$ des empfangenen Symbols $S_m$ nicht-aktiviert (logisch "0") ist, zur Wahrscheinlichkeit $p(u_k=1)$, daß das Bit $u_k$ an der Bitposition $k$ des empfangenen Symbols $S_m$ aktiviert (logisch "1") ist, berechnet.

$$L(u_k) = \log\left(\frac{p(u_k = 0)}{p(u_k = 1)}\right) \qquad\qquad (1)$$

Das Vorzeichen des LLR-Wertes $L(u_k)$ entspricht der "harten Entscheidung" über den Zustand des Bits $u_k$ und der Betrag des LLR-Wertes $L(u_k)$ gibt die Zuverlässigkeitsinformation über die "harte Entscheidung" (entspricht einer "weichen Entscheidung") wieder.

Weisen die zu übertragenden Symbole eine Bitanzahl $B$ auf, so besteht das Symbolalphabet aus insgesamt $2^B$ Symbolen. Die LLR $L(u_k)$, die dem Bit $u_k$ des Symbols $S_m$ - für alle $k$ zwischen 1 und $B$ - zugeordnet ist, ergibt sich bei Verwendung eines derartigen Symbolalphabets gemäß Gleichung (2) aus der Summe der insgesamt $2^{B-1}$ Symbol-

Wahrscheinlichkeiten $p(S_m|z)$ der möglichen Symbole $S_m$ bei Empfang des Symbols $z$ aus dem in der Modulation verwendeten Symbolalphabet, bei denen das Bit an der Bitposition $k$ nicht-aktiviert ist, im Verhältnis zur Summe der insgesamt $2^{B-1}$ Symbol-Wahrscheinlichkeiten $p(S_m|z)$ der möglichen Symbole $S_m$ bei Empfang des Symbols $z$ aus dem in der Modulation verwendeten Symbolalphabet, bei denen das Bit an der Bitposition $k$ aktiviert ist. Hierzu wird die Funktion $sel(S_m)_k=0$ bzw. $sel(S_m)_k=1$ verwendet, die ein Symbol $S_m$ mit einem nicht-aktivierten bzw. aktivierten Bit an der Bitposition $k$ ermittelt.

$$L(u_k) = \log\left(\frac{\displaystyle\sum_{\forall m|sel(S_m)_k=0}^{2^{B-1}} p(S_m \mid z)}{\displaystyle\sum_{\forall m|sel(S_m)_k=1}^{2^{B-1}} p(S_m \mid z)}\right) \qquad (2)$$

Anstelle eines Symbols $S_m$ mit einer Folge von rein binären Informationen $u_k$, wird im Empfänger ein Symbol $z$ empfangen, das gemäß Gleichung (3) mit einem Rauschen $w$ überlagert ist.

$$z = S_m + w \qquad (3)$$

Die Symbol-Wahrscheinlichkeit $p(S_m|z)$ des verrauschten Symbols $z$ kann gemäß Gleichung (4) aus anderen ermittelbaren Wahrscheinlichkeiten berechnet werden:

$$p(S_m \mid z) = \frac{p(z \mid S_m) \cdot p(S_m)}{p(z)} \qquad (4)$$

Für die Berechnung der Wahrscheinlichkeit $p(z|S_m)$, daß bei einem gesendeten Symbol $S_m$ im Empfänger ein verrauschtes Symbol $z$ empfangen wird, wird die Wahrscheinlichkeitsdichtefunktion $p(w)$ eines weißen, Gauß-verteilten Rauschens $w$ gemäß Gleichung (5) herangezogen.

$$p(w) = \frac{1}{\pi \cdot \sigma^2} \cdot \exp\left(-\frac{|w|^2}{\sigma^2}\right) \qquad (5)$$

Wird in die Wahrscheinlichkeitsdichtefunktion p(w) eines weißen, Gauß-verteilten Rauschens $w$ in Gleichung (5) das weiße, Gauß-verteilte Rauschen $w$ durch die mathematische Beziehung in Gleichung (3) ersetzt, so erhält man die in Gleichung (6) dargestellte Wahrscheinlichkeit $p(z|S_m)$:

$$p(z \mid S_m) = \frac{1}{\pi \cdot \sigma^2} \cdot \exp\left(-\frac{|z - S_m|^2}{\sigma^2}\right) \qquad (6)$$

Unter der Voraussetzung, daß alle Symbole $S_m$ gleich verteilt sind und damit die Wahrscheinlichkeitsdichte-funktion $p(S_m)$ über alle Symbole $S_m$ konstant ist und gleichzeitig die Wahrscheinlichkeitsdichtefunktion $p(z)$ für alle Symbole $S_m$ konstant ist, können diese Terme in Gleichung (6) vernachlässigt werden und ergeben den in Gleichung (7) dargestellten Zusammenhang für die Symbol-Wahrscheinlichkeit $p(S_m|z)$:

$$p(S_m \mid z) = \frac{1}{\pi \cdot \sigma^2} \cdot \exp\left(-\frac{|z - S_m|^2}{\sigma^2}\right) \qquad (7)$$

Führt man die Metrik $D_m$ ein, die gemäß Gleichung (8) die quadratische euklidische Distanz zwischen dem empfangenen verrauschten Symbol $z$ und dem gesendeten Symbol $S_m$ ist, kann die Beziehung für die Symbol-Wahrscheinlichkeit $p(S_m \mid z)$ in Gleichung (7) nach Gleichung (9) überführt werden.

$$D_m = |z - S_m|^2 \qquad (8)$$

$$p(S_m \mid z) = \frac{1}{\pi \cdot \sigma^2} \cdot \exp\left(-\frac{D_m}{\sigma^2}\right) \qquad (9)$$

Da das empfangene verrauschte Symbol $z$ im Konstellationsdiagramm gemäß Gleichung (10) aus einer reellen Komponente $z_R$ und einer imaginären Komponente $z_I$ und auch das gesendete Symbol $S_m$, das ein im Symbolalphabet der verwendeten Modulation enthaltenes Referenz-Symbol $S_m$ sein kann, im Konstellationsdiagramm gemäß Gleichung (11) aus einer reellen Komponente $S_{m,R}$ und einer imaginären Komponente $S_{m,I}$ besteht, kann der mathematische Ausdruck für die Metrik $D_m$ in Gleichung (8) nach Gleichung (12) umgeformt werden.

$$z = z_R + j \cdot z_I \qquad (10)$$

$$S_m = S_{m,R} + j \cdot S_{m,I} \qquad (11)$$

$$D_m = |z - S_m|^2 = \left(z_R - S_{m,R}\right)^2 + (z_I - S_{m,I})^2 \qquad (12)$$

Die Symbol-Wahrscheinlichkeit $p(S_m \mid z)$ in Gleichung (9) kann deshalb gemäß Gleichung (13) beschrieben werden.

$$p(S_m \mid z) = \frac{1}{\pi \cdot \sigma^2} \cdot \exp\left(-\frac{\left(z_R - S_{m,R}\right)^2 + (z_I - S_{m,I})^2}{\sigma^2}\right) \qquad (13)$$

Unter Einführung der vertikalen Metrik $V_m$, die gemäß Fig. 3A und Gleichung (14) den quadratischen vertikalen Abstand zwischen dem empfangenen verrauschten Symbol $z$ und einer Zeile von Referenz-Symbolen $S_m$ im Konstellationsdiagramm darstellt, und der horizontalen Metrik $H_m$, die gemäß Fig. 3A und Gleichung (15) den quadratischen horizontalen Abstand zwischen dem empfangenen verrauschten Symbol $z$ und einer Spalte von Referenz-Symbolen $S_m$ im Konstellationsdiagramm darstellt, ergibt sich für die Metrik $D_m$ die mathematische Beziehung der Gleichung (16):

$$V_m = (z_I - S_{m,I})^2 \qquad (14)$$

$$H_m = (z_R - S_{m,R})^2 \qquad (15)$$

$$D_m = H_m + V_m \qquad (16)$$

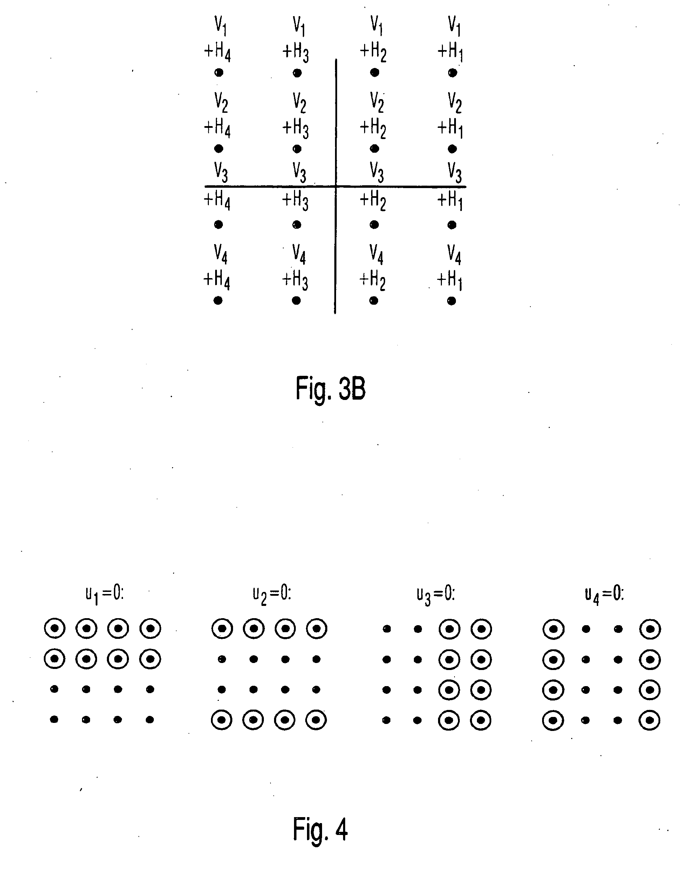

Für ein empfangenes verrauschtes Symbol $z$ mit bestimmten Koordinaten $z_R$ und $z_I$ kann somit jedem Referenz-Symbol $S_m$ im Konstellationsdiagramm gemäß Fig. 3B eine zugehörige vertikale und horizontale Metrik $V_m$ und $H_m$ zugeordnet werden.

Für die Symbol-Wahrscheinlichkeit $p(S_m|z)$ ergibt sich folglich die mathematische Beziehung in Gleichung (17):

$$p(S_m \mid z) = \frac{1}{\pi \cdot \sigma^2} \cdot \exp(-\frac{H_m + V_m}{\sigma^2}) = \frac{1}{\pi \cdot \sigma^2} \cdot \exp(-\frac{H_m}{\sigma^2}) \cdot \exp(-\frac{V_m}{\sigma^2}) \qquad (17)$$

Zur Vermeidung der sehr rechenintensiven Berechnung der Exponentialfunktion entsprechend Gleichung (17) wird in Anlehnung an die mathematischen Algorithmen der Kanalkodierung - Log-Maximum-a-posteriori-Algorithmus (Log-MAP-Algorithmus) - die Berechnung der Symbol-Wahrscheinlichkeit $p(S_m|z)$ gemäß Gleichung (18) in der Logarithmus-Ebene durchgeführt.

$$\log(p(S_m \mid z)) = \log(\frac{1}{\pi \cdot \sigma^2}) + (P_m + Q_m) \qquad (18)$$

Hierbei ist gemäß Gleichung (19) die logarithmierte von der horizontalen Metrik $H_m$ abhängige Symbol-Wahrscheinlichkeit $P_m$ und gemäß Gleichung (20) die logarithmierte von der vertikalen Metrik $V_m$ abhängige Symbol-Wahrscheinlichkeit $Q_m$ eingeführt worden.

$$P_m = \log\left[\exp(-\frac{H_m}{\sigma^2})\right] \qquad (19)$$

$$Q_m = \log\left[\exp(-\frac{V_m}{\sigma^2})\right] \qquad (20)$$

Wird die Beziehung für die logarithmierte Symbolwahrscheinlichkeit $\log(p(S_m|z))$ in die Beziehung für den LLR-Wert $L(u_k)$ in Gleichung (2) eingesetzt, so heben sich die Terme $\log(\frac{1}{\pi \cdot \sigma^2})$ der logarithmierten Symbolwahrschein-

lichkeit $\log(p(S_m|z))$ gegenseitig auf und können deshalb für die Berechnung der logarithmieren Symbolwahrscheinlichkeit $\log(p(S_m|z))$ entsprechend Gleichung (21) vernachlässigt werden.

$$\log(p(S_m \mid z)) = (P_m + Q_m) \qquad (21)$$

Gemäß Gleichung (2) ergibt sich der LLR-Wert $L(u_k)$ aus der Differenz zweier Symbol-Wahrscheinlichkeits-Additionen in der Logarithmus-Ebene. Da die Addition zweier Wahrscheinlichkeiten in der Logarithmus-Ebene gemäß Gleichung (22) komplizierter ist, wird zur Vereinfachung gemäß Gleichung (23) der Operator $\Omega$ eingeführt, der die Addition mehrerer Symbol-Wahrscheinlichkeiten in der Logarithmus-Ebene beschreibt.

$$\log\big(p(A) + p(B)\big) = \max\big(\log(p(A)), \log(p(B))\big) + \log\Big(1 + e^{-\left|\log(p(A)) - \log(p(B))\right|}\Big) \qquad (22)$$

$$\log(p(A) + p(B) + ...) = \log(p(A))\,\Omega\,\log(p(B))\,\Omega... \qquad (23)$$

Unter Berücksichtigung der Beziehung der logarithmierten Symbol-Wahrscheinlichkeit $\log(p(S_m|z))$ in Gleichung (21) kann für eine 16QAM-Modulation mit Referenz-Symbolen $S_m$ im Konstellationsdiagramm gemäß Fig. 4 die gemäß Gleichung (2) beschriebene Summe $\sum_{m=1}^{2^3} p(S_m \mid u_1 = 0)$ von Symbol-Wahrscheinlichkeiten $p(S_m|u_1=0)$, deren erstes Bit $u_1$ nicht-aktiviert ist, gemäß Gleichung (24) ermittelt werden:

$$\sum_{m=1}^{2^3} p(S_m \mid u_1 = 0) = (P_1 + Q_1)\,\Omega\,(P_2 + Q_1)\,\Omega\,(P_3 + Q_1)\,\Omega\,(P_4 + Q_1)\,\Omega\,(P_1 + Q_2)\,\Omega\,(P_2 + Q_2)$$

$$\Omega\,(P_3 + Q_2)\,\Omega\,(P_4 + Q_2) = P_1\,\Omega\,P_2\,\Omega\,P_3\,\Omega\,P_4 + Q_1\,\Omega\,Q_2$$

$$(24)$$

Analog kann gemäß Gleichung (25) die Summe $\sum_{m=1}^{2^3} p(S_m \mid u_1 = 1)$ von Symbol-Wahrscheinlichkeiten $p(S_m|u_1=1)$, deren erstes Bit $u_1$ aktiviert ist, ermittelt werden:

$$\sum_{m=1}^{2^3} p(S_m \mid u_1 = 1) = P_1\,\Omega\,P_2\,\Omega\,P_3\,\Omega\,P_4 + Q_3\,\Omega\,Q_4 \qquad (25)$$

Der LLR-Wert $L_L(u_1)$ in der Logarithmus-Ebene für das erste Bit $u_1$ des empfangenen Symbols $z$ ergibt sich in Anlehnung an Gleichung (2) aus Gleichung (26):

$$L_L(u_1) = \sum_{m=1}^{2^3} p(S_m \mid u_1 = 0) - \sum_{m=1}^{2^3} p(S_m \mid u_1 = 1) = P_1 \Omega\, P_2 \Omega\, P_3 \Omega\, P_4 + Q_1 \Omega\, Q_2 -$$

$$\left( P_1 \Omega\, P_2 \Omega\, P_3 \Omega\, P_4 + Q_3 \Omega\, Q_4 \right) = Q_1 \Omega\, Q_2 - Q_3 \Omega\, Q_4$$

$$(26)$$

Die LLR-Werte $L_L(u_2)$, $L_L(u_2)$ und $L_L(u_4)$ des zweiten, dritten und vierten Bits $u_2$, $u_3$ und $u_4$ des empfangenen Symbols $z$ bei Verwendung einer 16QAM-Modulation ergeben sich analog gemäß Fig. 4 und Gleichung (27), (28) und (29):

$$L_L(u_2) = Q_1 \Omega\, Q_4 - Q_2 \Omega\, Q_3$$

$$(27)$$

$$L_L(u_3) = P_1 \Omega\, P_2 - P_3 \Omega\, P_4$$

$$(28)$$

$$L_L(u_4) = P_1 \Omega\, P_4 - P_2 \Omega\, P_3$$

$$(29)$$

Bei Verwendung einer 64QAM-Modulation lassen sich die LLR-Werte $L_L(u_1)$, $L_L(u_2)$, $L_L(u_4)$, $L_L(u_5)$ und $L_L(u_6)$ des ersten, zweiten, dritten, vierten, fünften und sechsten Bits $u_1$, $u_2$, $u_3$, $u_4$ $u_5$ und $u_6$ des empfangenen Symbols $z$ gemäß Gleichung (30), (31), (32), (33), (34) und (35) berechnen:

$$L_L(u_1) = Q_1 \Omega\, Q_2 \Omega\, Q_3 \Omega\, Q_4 - Q_5 \Omega\, Q_6 \Omega\, Q_7 \Omega\, Q_8$$

$$(30)$$

$$L_L(u_2) = Q_1 \Omega\, Q_2 \Omega\, Q_7 \Omega\, Q_8 - Q_3 \Omega\, Q_4 \Omega\, Q_5 \Omega\, Q_6$$

$$(31)$$

$$L_L(u_3) = Q_1 \Omega\, Q_4 \Omega\, Q_5 \Omega\, Q_8 - Q_2 \Omega\, Q_3 \Omega\, Q_6 \Omega\, Q_7$$

$$(32)$$

$$L_L(u_4) = P_1 \Omega\, P_2 \Omega\, P_3 \Omega\, P_4 - P_5 \Omega\, P_6 \Omega\, P_7 \Omega\, P_8$$

$$(33)$$

$$L_L(u_5) = P_1 \Omega\, P_2 \Omega\, P_7 \Omega\, P_8 - P_3 \Omega\, P_4 \Omega\, P_5 \Omega\, P_6$$

$$(34)$$

$$L_L(u_6) = P_1 \Omega\, P_4 \Omega\, P_5 \Omega\, P_8 - P_2 \Omega\, P_3 \Omega\, P_6 \Omega\, P_7$$

$$(35)$$

Für eine QPSK-Modulation ergeben sich die LLR-Werte $L_L(u_1)$ und $L(u_2)$ des ersten und zweiten Bits $u_1$ und $u_2$ des empfangenen Symbols $z$ gemäß Gleichung (36) und (37):

$$L_L(u_1) = Q_1 - Q_2$$

$$(36)$$

$$L_L(u_2) = P_1 - P_2 \qquad\qquad (37)$$

Wird die Addition der Symbol-Wahrscheinlichkeiten in der Logarithmus-Ebene gemäß Gleichung (22) durch die Max-Log-Annäherung aus der Kanalkodierung ersetzt, so ergibt sich der in Gleichung (38) dargestellte mathematische Zusammenhang für die Addition der Symbol-Wahrscheinlichkeiten in der Logarithmus-Ebene:

$$\log\big(p(A)+p(B)\big) \approx \max\big(\log(p(A)),\log(p(B))\big) \qquad (38)$$

Für eine 16QAM-Modulation ergeben sich demnach die LLR-Werte $L_{ML}(u_1)$, $L_{ML}(u_2)$, $L_{ML}(u_2)$ und $L_{ML}(u_4)$ des ersten, zweiten, dritten und vierten Bits $u_1$, $u_2$, $u_3$ und $u_4$ des empfangenen Symbols $z$ bei einer Max-Log-Annäherung gemäß Gleichung (39), (40), (41) und (42):

$$L_{ML}(u_1) \approx \max(Q_1,Q_2) - \max(Q_3,Q_4) \qquad (39)$$

$$L_{ML}(u_2) \approx \max(Q_1,Q_4) - \max(Q_2,Q_3) \qquad (40)$$

$$L_{ML}(u_3) \approx \max(P_1,P_2) - \max(P_3,P_4) \qquad (41)$$

$$L_{ML}(u_4) \approx \max(P_1,P_4) - \max(P_2,P_3) \qquad (42)$$

Für 64QAM-Modulation ergeben sich demnach die LLR-Werte $L_{ML}(u_1)$, $L_{ML}(u_2)$, $L_{ML}(u_2)$, $L_{ML}(u_4)$, $L_{ML}(u_5)$ und $L_{ML}(u_6)$ des ersten, zweiten, dritten, vierten, fünften und sechsten Bits $u_1$, $u_2$, $u_3$, $u_4$, $u_5$ und $u_6$ des empfangenen Symbols $z$ bei einer Max-Log-Annäherung gemäß Gleichung (43), (44), (45), (46), (47) und (48):

$$L_{ML}(u_1) \approx \max\big(Q_1,Q_2,Q_3,Q_4\big) - \max\big(Q_5,Q_6,Q_7,Q_8\big) \qquad (43)$$

$$L_{ML}(u_2) \approx \max\big(Q_1,Q_2,Q_7,Q_8\big) - \max\big(Q_3,Q_4,Q_5,Q_6\big) \qquad (44)$$

$$L_{ML}(u_3) \approx \max\big(Q_1,Q_4,Q_5,Q_8\big) - \max\big(Q_2,Q_3,Q_6,Q_7\big) \qquad (45)$$

$$L_{ML}(u_4) \approx \max\big(P_1,P_2,P_3,P_4\big) - \max\big(P_5,P_6,P_7,P_8\big) \qquad (46)$$

$$L_{ML}(u_5) \approx \max\big(P_1,P_2,P_7,P_8\big) - \max\big(P_3,P_4,P_5,P_6\big) \qquad (47)$$

$$L_{ML}(u_6) \approx \max\big(P_1,P_4,P_5,P_8\big) - \max\big(P_2,P_3,P_6,P_7\big) \qquad (48)$$

Für die QPSK-Modulation ergeben sich für eine Max-Log-Näherung die identischen mathematischen Beziehungen für die LLR-Werte $L_{ML}(u_1)$ und $L_{ML}(u_2)$ des ersten und zweiten Bits $u_1$ und $u_2$ des empfangenen Symbols $z$ wie im Fall der Addition der Wahrscheinlichkeiten in der Logarithmus-Ebene gemäß Gleichung (36) und (37).

Bei Modulationen mit größeren Konstellationen können durch zusätzliche Optimierungen noch weitere mathematische Vereinfachungen erzielt werden.

Wird das erfindungsgemäße Verfahren bzw. die erfindungsgemäße Vorrichtung zur Ermittlung einer Zuverlässigkeitsinformation über den Zustand eines empfangenen Bits innerhalb eines iterativen Dekodierers (Turbo-Dekodierer) verwendet, so erhält das erfindungsgemäße Verfahren bzw. die erfindungsgemäße Vorrichtung neben der vom Demodulator gelieferten Bits $u_k$, die zum jeweils empfangenen Symbol $z$ gehören eine vom nachfolgenden Teil-Dekodierer für das jeweils empfangene Bit $u_k$ berechnete a-priori-Bit-Wahrschlichkeit $L_A(u_k)$. Die a-priori-Bit-Wahrscheinlichkeit $L_A(u_k)$ liegt als LLR-Wert $L(u_k)$ gemäß Gleichung (2) vor.

Aus den einzelnen a-priori-Bit-Wahrscheinlichkeiten $L_A(u_1)$, $L_A(u_2)$, $L_A(u_3)$ und $L_A(u_4)$ die vom jeweils anderen Teil-Dekodierer empfangen werden und zu einem beispielsweise aus den vier Bits $u_1$, $u_2$, $u_3$ und $u_4$ bestehenden Symbol $S_m$ gehören, wird die a-priori-Symbol-Wahrscheinlichkeit $p(u_1=\alpha_1|L_A(u_1))p(u_2=\alpha_2|L_A(u_2))p(u_3=\alpha_3|L_A(u_3))p(u_4=\alpha_4|L_A(u_4))$ gemäß Gleichung (49) durch Multiplikation der vier a-priori-Bit-Wahrscheinlichkeiten $L_A(u_1)$, $L_A(u_2)$, $L_A(u_3)$ und $L_A(u_4)$ mit den jeweiligen Bitzuständen $\alpha_1$, $\alpha_2$, $\alpha_3$ und $\alpha_4$ berechnet, die entweder aktiviert (logisch "1") oder nicht-aktiviert (logisch "0") sind:

$$p\left(S_m \mid L_A(u_1), L_A(u_2), L_A(u_3), L_A(u_4)\right) = p\left(u_1 = \alpha_1 \mid L_A(u_1)\right) p\left(u_2 = \alpha_2 \mid L_A(u_2)\right)$$
$$p\left(u_3 = \alpha_3 \mid L_A(u_3)\right) p\left(u_4 = \alpha_4 \mid L_A(u_4)\right) \tag{49}$$

Aus der mathematischen Beziehung für den LLR-Wert $L(u_k)$ in Gleichung (1) können die Wahrscheinlichkeit $p(u_k=0)$ für ein nicht-aktiviertes Bit $u_k$ gemäß Gleichung (50) und die Wahrscheinlichkeit $p(u_k=1)$ für ein aktiviertes Bit $u_k$ gemäß Gleichung (51) ermittelt werden.

$$p\left(u_k = 0\right) = \frac{1}{1 + e^{-L(u_k)}} \tag{50}$$

$$p\left(u_k = 1\right) = \frac{e^{-L(u_k)}}{1 + e^{-L(u_k)}} \tag{51}$$

Für ein Referenz-Symbol $S_m$ mit den beispielhaften Bitzuständen $\alpha_1=1$, $\alpha_2=0$, $\alpha_3=0$ und $\alpha_4=1$ ergibt sich ausgehend von Gleichung (49) unter Einbindung von Gleichung (50) und (51) für die a-priori-Symbol-Wahrscheinlichkeit $p(S_m|L_A(u_1),L_A(u_2),L_A(u_3),L_A(u_4))$ die Beziehung in Gleichung (52):

$$p\left(S_m \mid L_A(u_1), L_A(u_2), L_A(u_3), L_A(u_4)\right) =$$
$$= \frac{e^{-L_A(u_1)-L_A(u_4)}}{\left(1 + e^{-L_A(u_1)}\right)\left(1 + e^{-L_A(u_2)}\right)\left(1 + e^{-L_A(u_3)}\right)\left(1 + e^{-L_A(u_4)}\right)} \tag{52}$$

Die logarithmierte a-priori-Symbol-Wahrscheinlichkeit führt zur mathematischen Beziehung in Gleichung (53), in der ein aus der Logarithmierung des Nennerterms hervorgehende und in Gleichung (54) dargestellte Größe $K$ auftritt, die für jede Belegung der Bitzustände $\alpha_1$, $\alpha_2$, $\alpha_3$ und $\alpha_4$ identisch ist:

$$\log\left(p\left(S_m \mid L_A(u_1), L_A(u_2), L_A(u_3), L_A(u_4)\right)\right) = -L_A(u_1) - L_A(u_4) + K \tag{53}$$

$$K = -\log\left(\left(1 + e^{-L_A(u_1)}\right)\left(1 + e^{-L_A(u_2)}\right)\left(1 + e^{-L_A(u_3)}\right)\left(1 + e^{-L_A(u_4)}\right)\right) \qquad (54)$$

Die Größe $K$ in Gleichung (53) kann aus denselben Überlegungen, die für den Term $\log(\frac{1}{\pi \cdot \sigma^2})$ in Gleichung (18) gelten, vernachlässigt werden, so daß für die logarithmische a-priori-Symbol-Wahrscheinlichkeit bei beispielhaften Bitzuständen $\alpha_1 = 1$, $\alpha_2 = 0$, $\alpha_3 = 0$ und $\alpha_4 = 1$ sich die mathematische Beziehung in Gleichung (55) ergibt:

$$\log\left(p\left(S_m \mid L_A(u_1), L_A(u_2), L_A(u_3), L_A(u_4)\right)\right) = -L_A(u_1) - L_A(u_4) \qquad (55)$$

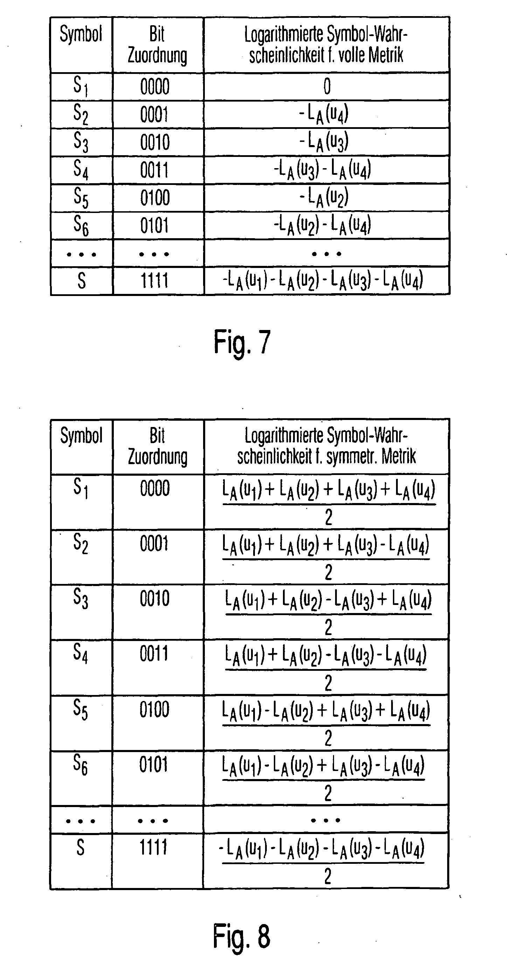

Für Referenz-Symbole $S_m$ mit anderen Bitzuständen $\alpha_1$, $\alpha_2$, $\alpha_3$ und $\alpha_4$ der vier Bits $u_1$, $u_2$, $u_3$ und $u_4$ ergeben sich die in der Tabelle der Fig. 7 aufgeführten logarithmierten a-priori-Symbol-Wahrscheinlichkeiten bei voller Metrik.

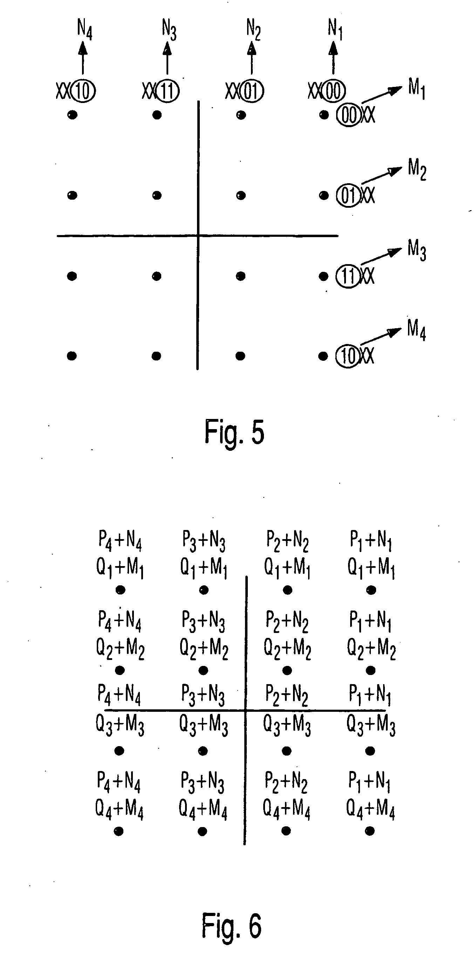

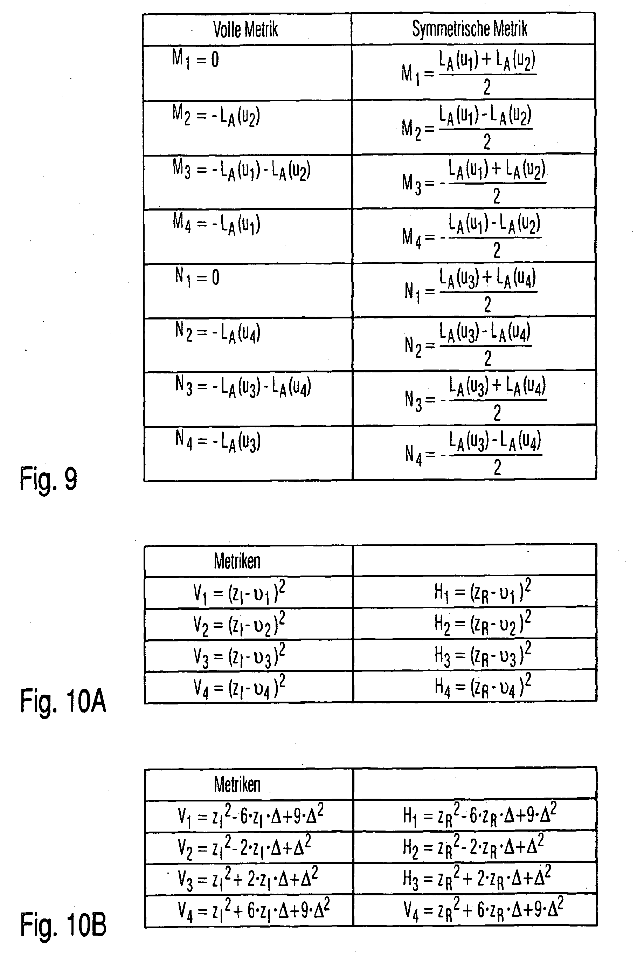

Für die aus den einzelnen a-priori-Bit-Wahrscheinlichkeiten auf diese Weise ermittelbaren logarithmierten a-priori-Symbol-Wahrscheinlichkeiten können aufgrund der Gray-Bit-Zuordnung oder Gray-Bit-äquivalenten Zuordnung der einzelnen Referenz-Symbole $S_m$ im Konstellationsdiagramm die in Fig. 5 dargestellten horizontalen a-priori-Symbol-Wahrscheinlichkeiten $N_1$, $N_2$, $N_3$ und $N_4$ sowie die vertikalen a-priori-Symbol-Wahrscheinlichkeiten $M_1$, $M_2$, $M_3$ und $M_4$ eingeführt werden. Die Zuordnung zwischen den einzelnen horizontalen a-priori-Symbol-Wahrscheinlichkeiten $N_1$, $N_2$, $N_3$ und $N_4$ sowie den vertikalen a-priori-Symbol-Wahrscheinlichkeiten $M_1$, $M_2$, $M_3$ und $M_4$ und den vom anderen Teil-Dekodierer ermittelten a-priori-Bit-Wahrscheinlichkeiten $L_A(u_1)$, $L_A(u_2)$, $L_A(u_3)$ und $L_A(u_4)$ ist der linken Spalte der Tabelle in Fig. 9 zu entnehmen.

Um die Anzahl von mathematischen Operationen zur Berechnung der horizontalen und vertikalen a-priori-Symbol-Wahrscheinlichkeiten weiter zu minimieren, werden symmetrische horizontale und vertikale a-priori-Symbol-Wahrscheinlichkeiten eingeführt. Die hierzu erforderlichen logarithmierten a-priori-Symbol-Wahrscheinlichkeiten $\log_S(p(S_m \mid L_A(u_1), L_A(u_2), L_A(u_3), L_A(u_4)))$ für jedes Referenz-Symbol $S_m$ im Konstellationsdiagramm ergeben sich aus den logarithmierten a-priori-Symbol-Wahrscheinlichkeiten $\log(p(S_m \mid L_A(u_1), L_A(u_2), L_A(u_3), L_A(u_4)))$ bei voller Metrik gemäß Gleichung (56):

$$\log_S\left(p\left(S_m \mid L_A(u_1), L_A(u_2), L_A(u_3), L_A(u_4)\right)\right) =$$
$$= \log\left(p\left(S_m \mid L_A(u_1), L_A(u_2), L_A(u_3), L_A(u_4)\right)\right) \qquad (56)$$
$$+ \frac{L_A(u_1) + L_A(u_2) + L_A(u_3) + L_A(u_4)}{2}$$

Auf diese Weise erhält man für jedes Symbol $S_m$ mit jeweils unterschiedlichen Bitzuständen $\alpha_1$, $\alpha_2$, $\alpha_3$ und $\alpha_4$ der vier Bits $u_1$, $u_2$, $u_3$ und $u_4$ die in der Tabelle in Fig. 8 dargestellten logarithmierten Symbol-Wahrscheinlichkeiten bei symmetrischer Metrik.

Für eine Gray-Bit-Zuordnung oder Gray-Bit-äqivalenten Zuordnung der einzelnen Referenz-Symbole $S_m$ im Konstellationsdiagramm sind die symmetrischen horizontalen a-priori-Symbol-Wahrscheinlichkeiten $N_1$, $N_2$, $N_3$ und $N_4$ und die symmetrischen vertikalen a-priori-Symbol-Wahrscheinlichkeiten $M_1$, $M_2$, $M_3$ und $M_4$ aus den vom anderen Teil-Dekodierer ermittelten a-priori-Bit-Wahrscheinlichkeiten $L_A(u_1)$, $L_A(u_2)$, $L_A(u_3)$ und $L_A(u_4)$ der rechten Spalte der Tabelle in Fig. 9 zu entnehmen.

Die auf diese Weise ermittelten horizontalen a-priori-Symbol-Wahrscheinlichkeiten $N_1$, $N_2$, $N_3$ und $N_4$ werden gemäß Gleichung (57) und Fig. 6 mit den von den horizontalen Metriken $H_1$, $H_2$, $H_3$ und $H_4$ jeweils abhängigen horizontalen Symbol-Wahrscheinlichkeiten $P_1$, $P_2$, $P_3$ und $P_4$ addiert, während die vertikalen a-priori-Symbol-Wahrscheinlichkeiten $M_1$, $M_2$, $M_3$ und $M_4$ gemäß Gleichung (58) und Fig. 6 zu den von den vertikalen Metriken $V_1$, $V_2$, $V_3$ und $V_4$ jeweils abhängigen vertikalen Symbol-Wahrscheinlichkeiten $Q_1$, $Q_2$, $Q_3$ und $Q_4$ addiert werden.

$$C_m = P_m + N_m \tag{57}$$

$$R_m = Q_m + M_m \tag{58}$$

Für eine 16QAM-Modulation ergeben sich in Analogie zu den Gleichungen (26) bis (29) die auf den a-priori-Bit-Wahrscheinlichkeiten $L_A(u_1)$, $L_A(u_2)$, $L_A(u_3)$ und $L_A(u_4)$ jeweils basierende LLR-Werte $L'_L(u_1)$, $L'_L(u_2)$, $L'_L(u_3)$, und $L'_L(u_4)$ des ersten, zweiten, dritten und vierten Bits $u_1$, $u_2$, $u_3$ und $u_4$ des empfangenen Symbols z gemäß Gleichung (59) bis (62):

$$L'_L(u_1) = R_1 \, \Omega \, R_2 - R_3 \, \Omega \, R_4 \tag{59}$$

$$L'_L(u_2) = R_1 \, \Omega \, R_4 - R_2 \, \Omega \, R_3 \tag{60}$$

$$L'_L(u_3) = C_1 \, \Omega \, C_2 - C_3 \, \Omega \, C_4 \tag{61}$$

$$L'_L(u_4) = C_1 \, \Omega \, C_4 - C_2 \, \Omega \, C_3 \tag{62}$$

Bei einer 64QAM-Modulation ergeben sich in Analogie zu den Gleichungen (30) bis (35) die LLR-Werte $L'_L(u_1)$, $L'_L(u_2)$, $L'_L(u_3)$, $L'_L(u_4)$, $L'_L(u_5)$, und $L'_L(u_6)$ des ersten, zweiten, dritten, vierten, fünften und sechsten Bits $u_1$, $u_2$, $u_3$, $u_4$, $u_5$ und $u_6$ des empfangenen Symbols z gemäß Gleichung (63) bis (68):

$$L'_L(u_1) = R_1 \, \Omega \, R_2 \, \Omega \, R_3 \, \Omega \, R_4 - R_5 \, \Omega \, R_6 \, \Omega \, R_7 \, \Omega \, R_8 \tag{63}$$

$$L'_L(u_2) = R_1 \, \Omega \, R_2 \, \Omega \, R_7 \, \Omega \, R_8 - R_3 \, \Omega \, R_4 \, \Omega \, R_5 \, \Omega \, R_6 \tag{64}$$

$$L'_L(u_3) = R_1 \, \Omega \, R_4 \, \Omega \, R_5 \, \Omega \, R_8 - R_2 \, \Omega \, R_3 \, \Omega \, R_6 \, \Omega \, R_7 \tag{65}$$

$$L'_L(u_4) = C_1 \, \Omega \, C_2 \, \Omega \, C_3 \, \Omega \, C_4 - C_5 \, \Omega \, C_6 \, \Omega \, C_7 \, \Omega \, C_8 \tag{66}$$

$$L'_L(u_5) = C_1 \Omega\, C_2 \Omega\, C_7 \Omega\, C_8 - C_3 \Omega\, C_4 \Omega\, C_5 \Omega\, C_6 \qquad (67)$$

$$L'_L(u_6) = C_1 \Omega\, C_4 \Omega\, C_5 \Omega\, C_8 - C_2 \Omega\, C_3 \Omega\, C_6 \Omega\, C_7 \qquad (68)$$

Bei einer QPSK-Modulation ergeben sich in Analogie zu den Gleichungen (36) und (37) die LLR-Werte $L'_L(u_1)$ und $L'_L(u_2)$ des ersten und zweiten Bits $u_1$ und $u_2$ des empfangenen Symbols $z$ gemäß Gleichung (69) und (70):

$$L'_L(u_1) = R_1 - R_2 \qquad (69)$$

$$L'_L(u_2) = C_1 - C_2 \qquad (70)$$

Bei Anwendung einer MAX-Log-Näherung ergeben sich für eine 16QAM-Modulation die LLR-Werte $L'_{ML}(u_1)$, $L'_{ML}(u_2)$, $L'_{ML}(u_3)$ und $L'_{ML}(u_4)$ des ersten, zweiten, dritten und vierten Bits $u_1$, $u_2$, $u_3$ und $u_4$ des empfangenen Symbols $z$ gemäß Gleichung (71) bis (74):

$$L'_{ML}(u_1) = \max(R_1, R_2) - \max(R_3, R_4) \qquad (71)$$

$$L'_{ML}(u_2) = \max(R_1, R_4) - \max(R_2, R_3) \qquad (72)$$

$$L'_{ML}(u_3) = \max(C_1, C_2) - \max(C_3, C_4) \qquad (73)$$

$$L'_{ML}(u_4) = \max(C_1, C_4) - \max(C_2, C_3) \qquad (74)$$

Die LLR-Werte $L'_{ML}(u_1)$, $L'_{ML}(u_2)$, $L'_{ML}(u_3)$, $L'_{ML}(u_4)$, $L'_{ML}(u_5)$ und $L'_{ML}(u_6)$, des ersten, zweiten, dritten, vierten, fünften und sechsten Bits $u_1$, $u_2$, $u_3$, $u_4$ $u_5$ und $u_6$ des empfangenen Symbols $z$ einer 16QAM-Modulation ergeben sich bei Anwendung einer MAX-Log-Näherung gemäß Gleichung (75) bis (80):

$$L'_{ML}(u_1) = \max\left(R_1, R_2, R_3, R_4\right) - \max\left(R_5, R_6, R_7, R_8\right) \qquad (75)$$

$$L'_{ML}(u_2) = \max\left(R_1, R_2, R_7, R_8\right) - \max\left(R_3, R_4, R_5, R_6\right) \qquad (76)$$

$$L'_{ML}(u_3) = \max\left(R_1, R_4, R_5, R_8\right) - \max\left(R_2, R_3, R_6, R_7\right) \tag{77}$$

$$L'_{ML}(u_4) = \max\left(C_1, C_2, C_3, C_4\right) - \max\left(C_5, C_6, C_7, C_8\right) \tag{78}$$

$$L'_{ML}(u_5) = \max\left(C_1, C_2, C_7, C_8\right) - \max\left(C_3, C_4, C_5, C_6\right) \tag{79}$$

$$L'_{ML}(u_6) = \max\left(C_1, C_4, C_5, C_8\right) - \max\left(C_2, C_3, C_6, C_7\right) \tag{80}$$

Für eine QPSK-Modulation ergeben sich bei Anwendung der Max-Log-Näherung die identischen Beziehungen für die LLR-Werte $L'_{ML}(u_1)$ und $L'_{ML}(u_2)$ des ersten und zweiten Bits $u_1$ und $u_2$ des empfangenen Symbols $z$ wie im Fall einer LLR-Berechnung in der Logarithmus-Ebene gemäß Gleichung (69) und (70).

Für die Ermittlung der horizontalen und vertikalen Metriken gemäß Gleichung (15) und (16) kann bei einer quadratischen Konstellation der einzelnen Referenz-Symbole $S_m$ im Konstellationsdiagramms eine weitere Symmetrie ausgenutzt werden, um, wie im folgenden gezeigt wird, weitere Berechnungsvereinfachungen zu erzielen. Die Koordinaten der einzelnen Referenz-Symbole $S_m$ im Konstellationsdiagramm seien gemäß Fig. 1B $v_1$, $v_2$, $v_3$ und $v_4$. Damit ergeben sich die in der Tabelle in Fig. 10A dargestellten mathematischen Beziehungen für die vier horizontalen Metriken $H_1$, $H_2$, $H_3$ und $H_4$ und für die vier vertikalen Metriken $V_1$, $V_2$, $V_3$ und $V_4$. Die vier Koordinaten $v_1$, $v_2$, $v_3$ und $v_4$ weisen jeweils einen äquidistanten Abstand von $2 \cdot \Delta$ auf, wobei $\Delta$ eine beliebige Konstante ist. Somit ergeben sich für die vier Koordinaten $v_1$, $v_2$, $v_3$ und $v_4$ die in den Gleichungen (81) bis (84) dargestellten mathematischen Zusammenhänge, die zu den in der Tabelle in Fig. 10B dargestellten mathematischen Beziehungen für die vier horizontalen Metriken $H_1$, $H_2$, $H_3$ und $H_4$ und für die vier vertikalen Metriken $V_1$, $V_2$, $V_3$ und $V_4$ führen.

$$v_1 = 3 \cdot \Delta \tag{81}$$

$$v_2 = \Delta \tag{82}$$

$$v_3 = -3 \cdot \Delta \tag{83}$$

$$v_4 = -\Delta \tag{84}$$

Bei der Addition der horizontalen und vertikalen Metrik $H_m$ und $V_m$ zur Berechnung der logarithmierten Symbol-Wahrscheinlichkeit $\log(p(S_m|z))$ für jedes Referenz-Symbol $S_m$ gemäß Gleichung (17) kann für jedes Referenz-Symbol $S_m$ ein Term $z_R^2 + z_I^2$ sowie ein Faktor $\Delta^2$ vor die Exponentialfunktion gezogen werden, der bei der Berechnung der einzelnen LLR-Werte $L(u_k)$ analog wie der Vorfaktor $\log(\dfrac{1}{\pi \cdot \sigma^2})$ kompensiert wird. Die entsprechend vereinfachten mathematischen Beziehungen für die vier horizontalen Metriken $H_1$, $H_2$, $H_3$ und $H_4$ und für die vier vertikalen Metriken $V_1$, $V_2$, $V_3$ und $V_4$ gehen aus der Tabelle in Fig. 10C hervor und beinhalten eine geringere Anzahl von mathematischen Operationen.

Zur Ermittlung der sogenannten "extrinsischen" logarithmierten Bit-Wahrscheinlichkeit $L_E(u_k)$, der zwischen den einzelnen Teil-Dekodierern eines iterativer Dekodierers übermittelt wird, wird die vom Detektor nach obiger Darstellung ermittelte logarithmierte Bit-Wahrscheinlichkeit $L(u_k)$ um die vom anderen Teil-Dekodierer ermittelte logarithmierte a-priori-Bit-Wahrscheinlichkeit $L_A(u_k)$ subtraktiv normiert.

Zur Ermittlung der "extrinsischen" logarithmierten Bit-Wahrscheinlichkeit $L_{EL}(u_1)$ des ersten Bits $u_1$ des empfangenen Symbols $z$ in der Logarithmus-Ebene bei einer 16QAM-Modulation wird die logarithmierte a-priori-Symbol-Wahrscheinlichkeit $L'_L(u_1)$ ausgehend von Gleichung (59) unter Berücksichtigung von Gleichung (58) herangezogen und durch Einsetzen der mathematischen Beziehungen für die vertikalen a-priori-Symbol-Wahrscheinlichkeiten $M_1$, $M_2$, $M_3$ und $M_4$ bei voller Metrik in der linken Spalte der Tabelle in Fig. 9 gemäß Gleichung (85) mathematisch umgeformt:

$$L'_L(u_1) = (Q_1 + M_1)\,\Omega\,(Q_2 + M_2) - (Q_3 + M_3)\,\Omega\,(Q_4 + M_4) =$$
$$= (Q_1 + 0)\,\Omega\,(Q_2 - L_A(u_2)) - (Q_3 - L_A(u_1) - L_A(u_2))\,\Omega\,(Q_4 - L_A(u_1)) =$$
$$= (Q_1)\,\Omega\,(Q_2 - L_A(u_2)) - (Q_3 - L_A(u_2))\,\Omega\,(Q_4) + L_A(u_1) \qquad (85)$$

Die "extrinsische" logarithmierte Bit-Wahrscheinlichkeit $L_{EL}(u_1)$ des ersten Bits $u_1$ des empfangenen Symbols $z$ bei einer 16QAM-Modulation ergibt sich daraufhin gemäß Gleichung (86) aus der a-priori-Symbol-Wahrscheinlichkeit $L'_L(u_1)$ am Ausgang des Teil-Dekodierers abzüglich der a-priori-Bit-Wahrscheinlichkeit $L_A(u_1)$:

$$L_{EL}(u_1) = L'_L(u_1) - L_A(u_1) = Q_1\,\Omega\,(Q_2 - L_A(u_2)) - (Q_3 - L_A(u_2))\,\Omega\,Q_4 \quad (86)$$

Analog wird für die Ermittlung der "extrinsischen" logarithmierten Bit-Wahrscheinlichkeit $L_{EL}(u_2)$ des zweiten Bits $u_2$ des empfangenen Symbols $z$ bei einer 16QAM-Modulation die logarithmierte a-priori-Symbol-Wahrscheinlichkeit $L'_L(u_2)$ der Gleichung (60) unter Berücksichtigung von Gleichung (58) und unter Einsetzen der mathematischen Beziehungen für die vertikalen a-priori-Symbol-Wahrscheinlichkeiten $M_1$, $M_2$, $M_3$ und $M_4$ bei voller Metrik in der linken Spalte der Tabelle in Fig. 9 gemäß Gleichung (87) mathematisch umgeformt:

$$L'_L(u_2) = (Q_1 + M_1)\,\Omega\,(Q_4 + M_4) - (Q_2 + M_2)\,\Omega\,(Q_3 + M_3) =$$
$$= (Q_1 + 0)\,\Omega\,(Q_4 - L_1) - (Q_2 - L_2)\,\Omega\,(Q_3 - L_1 - L_2) \qquad (87)$$

Die "extrinsische" logarithmierte Bit-Wahrscheinlichkeit $L_{EL}(u_2)$ des ersten Bits $u_2$ des empfangenen Symbols $z$ bei einer 16QAM-Modulation ergibt sich daraufhin gemäß Gleichung (88) aus der a-priori-Symbol-Wahrscheinlichkeit $L'_L(u_2)$ am Ausgang des Teil-Dekodierers abzüglich der a-priori-Bit-Wahrscheinlichkeit $L_A(u_2)$:

$$L_{EL}(u_2) = L'_L(u_2) - L_A(u_2) = Q_1\,\Omega\,(Q_4 - L_A(u_1)) - Q_2\,\Omega\,(Q_3 - L_A(u_1)) \quad (88)$$

Die Ermittlung der "extrinsischen" logarithmierten Bit-Wahrscheinlichkeit $L_{EL}(u_3)$ und $L_{EL}(u_4)$ des dritten und

vierten Bits $u_3$ und $u_4$ des empfangenen Symbols $z$ bei einer 16QAM-Modulation läßt sich analog durchführen und führt zur mathematischen Beziehung in Gleichung (89) und (90).

$$L_{EL}(u_3) = P_1 \Omega \ (P_2 - L_A(u_4)) - (P_3 - L_A(u_4)) \Omega \ P_4 \qquad (89)$$

$$L_{EL}(u_4) = P_1 \Omega \ (P_4 - L_A(u_3)) - P_2 \Omega \ (P_3 - L_A(u_3)) \qquad (90)$$

Bei einer 64QAM-Modulation wird zur Ermittlung der "extrinsischen" logarithmierten Bit-Wahrscheinlichkeit $L_{EL}(u_1)$ des ersten Bits $u_1$ des empfangenen Symbols $z$ in der Logarithmus-Ebene die logarithmierte a-priori-Symbol-Wahrscheinlichkeit $L'_L(u_1)$ aus Gleichung (63) unter Berücksichtigung von Gleichung (58) herangezogen und durch Einsetzen der an dieser Stelle nicht ermittelten mathematischen Beziehungen für die vertikalen a-priori-Symbol-Wahrscheinlichkeiten $M_1$, $M_2$, $M_3$ und $M_4$ für die 64QAM-Modulation gemäß Gleichung (91) mathematisch umgeformt:

$$
\begin{aligned}
L'_L(u_1) &= R_1 \Omega \ R_2 \Omega \ R_3 \Omega \ R_4 - R_5 \Omega \ R_6 \Omega \ R_7 \Omega \ R_8 = \\
&= (Q_1 + M_1) \Omega \ (Q_2 + M_2) \Omega \ (Q_3 + M_3) \Omega \ (Q_4 + M_4) \\
&\quad - (Q_5 + M_5) \Omega \ (Q_6 + M_6) \Omega \ (Q_7 + M_7) \Omega \ (Q_8 + M_8) \\
&= Q_1 \Omega \ (Q_2 - L_A(u_3)) \Omega \ (Q_3 - L_A(u_2) - L_A(u_3)) \Omega \ (Q_4 - L_A(u_2)) \\
&\quad - (Q_5 - L_A(u_2)) \Omega \ (Q_6 - L_A(u_2) - L_A(u_3)) \Omega \ (Q_7 - L_A(u_3)) \Omega \ Q_8 + L_A(u_1)
\end{aligned}
\qquad (91)
$$

Die "extrinsische" logarithmierte Bit-Wahrscheinlichkeit $L_{EL}(u_1)$ des ersten Bits $u_1$ des empfangenen Symbols $z$ bei einer 64QAM-Modulation ergibt sich daraufhin gemäß Gleichung (92) aus der a-priori-Symbol-Wahrscheinlichkeit $L'_L(u_1)$ am Ausgang des Teil-Dekodierers abzüglich der a-priori-Bit-Wahrscheinlichkeit $L_A(u_1)$:

$$
\begin{aligned}
L_{EL}(u_1) &= Q_1 \ \Omega \ (Q_2 - L_A(u_3)) \Omega \ (Q_3 - L_A(u_2) - L_A(u_3)) \Omega \ (Q_4 - L_A(u_2)) \\
&\quad - (Q_5 - L_A(u_2)) \Omega \ (Q_6 - L_A(u_2) - L_A(u_3)) \Omega \ (Q_7 - L_A(u_3)) \Omega \ Q_8
\end{aligned}
\qquad (92)
$$

Die Ermittlung der "extrinsischen" logarithmierten Bit-Wahrscheinlichkeit $L_{EL}(u_3)$, $L_{EL}(u_4)$, $L_{EL}(u_5)$ und $L_{EL}(u_6)$ des dritten, vierten, fünften und sechsten Bits $u_3$, $u_4$, $u_5$ und $u_6$ des empfangenen Symbols $z$ bei einer 64QAM-Modulation läßt sich analog durchführen und führt zur mathematischen Beziehung in Gleichung (93) bis (97):

$$
\begin{aligned}
L_{EL}(u_3) &= Q_1 \Omega \ (Q_2 - L_A(u_3)) \Omega \ (Q_7 - L_A(u_1) - L_A(u_3)) \Omega \ (Q_8 - L_A(u_1)) \\
&\quad - (Q_3 - L_A(u_3)) \Omega \ Q_4 \Omega \ (Q_5 - L_A(u_1)) \Omega \ (Q_6 - L_A(u_1) - L_A(u_3))
\end{aligned}
\qquad (93)
$$

$$L_{EL}(u_3) = Q_1 \Omega \; (Q_4 - L_A(u_2)) \Omega \; (Q_5 - L_A(u_1) - L_A(u_2)) \Omega \; (Q_8 - L_A(u_1)$$
$$- Q_2 \Omega \; (Q_3 - L_A(u_2)) \Omega \; (Q_6 - L_A(u_1) - L_A(u_2)) \Omega \; (Q_7 - L_A(u_1)$$

$$(94)$$

$$L_{EL}(u_4) = P_1 \Omega \; (P_2 - L_A(u_6)) \Omega \; (P_3 - L_A(u_5) - L_A(u_6)) \Omega \; (P_4 - L_A(u_5))$$
$$- (P_5 - L_A(u_5)) \Omega \; (P_6 - L_A(u_5) - L_A(u_6)) \Omega \; (P_7 - L_A(u_6)) \Omega \; P_8$$

$$(95)$$

$$L_{EL}(u_5) = P_1 \Omega \; (P_2 - L_A(u_6)) \Omega \; (P_7 - L_A(u_4) - L_A(u_6)) \Omega \; (P_8 - L_A(u_4))$$
$$- (P_3 - L_A(u_6)) \Omega \; P_4 \Omega \; (P_5 - L_A(u_4)) \Omega \; (P_6 - L_A(u_4) - L_A(u_6))$$

$$(96)$$

$$L_{EL}(u_6) = P_1 \Omega \; (P_4 - L_A(u_5)) \Omega \; (P_5 - L_A(u_4) - L_A(u_5)) \Omega \; (P_8 - L_A(u_4))$$
$$- P_2 \Omega \; (P_3 - L_A(u_5)) \Omega \; (P_6 - L_A(u_4) - L_A(u_5)) \Omega \; (P_7 - L_A(u_4))$$

$$(97)$$

Bei einer QPSK-Modulation wird zur Ermittlung der "extrinsischen" logarithmierten Bit-Wahrscheinlichkeit $L_{EL}(u_1)$ des ersten Bits $u_1$ des empfangenen Symbols $z$ in der Logarithmus-Ebene die logarithmierte a-priori-Symbol-Wahrscheinlichkeit $L'_L(u_1)$ aus Gleichung (69) unter Berücksichtigung von Gleichung (58) herangezogen und durch Einsetzen der an dieser Stelle nicht ermittelten mathematischen Beziehungen für die vertikalen a-priori-Symbol-Wahrscheinlichkeiten $M_1$, $M_2$, $M_3$ und $M_4$ für die QPSK-Modulation gemäß Gleichung (98) mathematisch umgeformt:

$$L'_L(u_1) = R_1 - R_2 = Q_1 - Q_2 + M_1 - M_2 = Q_1 - Q_2 + (0) - L_A(u_1) \qquad (98)$$

Die "extrinsische" logarithmierte Bit-Wahrscheinlichkeit $L_{EL}(u_1)$ des ersten Bits $u_1$ des empfangenen Symbols $z$ in der Logarithmus-Ebene bei einer QPSK-Modulation ergibt sich daraufhin gemäß Gleichung (99) aus der a-priori-Symbol-Wahrscheinlichkeit $L'_L(u_1)$ am Ausgang des Teil-Dekodierers abzüglich der a-priori-Bit-Wahrscheinlichkeit $L_A(u_1)$ und unter Ausnutzung der Symmetrie der vertikalen Symbolwahrscheinlichkeiten ($Q_1 = -Q_2$):

$$L_{EL}(u_1) = L'_L(u_1) - L_A(u_1) = 2 \cdot Q_1 \qquad (99)$$

Analog wird für die Ermittlung der "extrinsischen" logarithmierten Bit-Wahrscheinlichkeit $L_{EL}(u_2)$ des zweiten Bits $u_2$ des empfangenen Symbols $z$ bei einer QPSK-Modulation die logarithmierte a-priori-Symbol-Wahrscheinlichkeit $L'_L(u_2)$ der Gleichung (64) unter Berücksichtigung von Gleichung (58) und unter Einsetzen der an dieser Stelle nicht ermittelten mathematischen Beziehungen für die vertikalen a-priori-Symbol-Wahrscheinlichkeiten $M_1$, $M_2$, $M_3$ und $M_4$ gemäß Gleichung (100) mathematisch umgeformt:

$$L'_L(u_2) = C_1 - C_2 = P_1 - P_2 + N_1 - N_2 = P_1 - P_2 + (0) - (-L_A(u_2)) \qquad (100)$$

Die "extrinsische" logarithmierte Bit-Wahrscheinlichkeit $L_{EL}(u_2)$ des ersten Bits $u_2$ des empfangenen Symbols $z$ bei einer QPSK-Modulation ergibt sich daraufhin gemäß Gleichung (101) aus der a-priori-Symbol-Wahrscheinlichkeit $L'_L(u_2)$ am Ausgang des Teil-Dekodierers abzüglich der a-priori-Bit-Wahrscheinlichkeit $L_A(u_2)$ und unter Ausnutzung der Symmetrie der horizontalen Symbol-Wahrscheinlichkeiten ($P_1=-P_2$):

$$L_{EL}(u_2) = L'_L(u_2) - L_A(u_2) = 2 \cdot P_1 \qquad (101)$$

Werden zur Ermittlung der "extrinsischen" logarithmierten Bit-Wahrscheinlichkeiten $L_{EL}(u_1)$, $L_{EL}(u_2)$, $L_{EL}(u_3)$ und $L_{EL}(u_4)$ des ersten, zweiten, dritten und vierten Bits $u_1$, $u_2$, $u_3$ und $u_4$ des empfangenen Symbols $z$ bei einer 16QAM-Modulation die vertikalen a-priori-Symbol-Wahrscheinlichkeiten M$_1$, M$_2$, M$_3$ und M$_4$ bei symmetrischer Metrik in der rechten Spalte der Tabelle in Fig. 9 an Stelle der vollen Metrik in der linken Spalte der Tabelle in Fig. 9 in die logarithmierte a-priori-Symbol-Wahrscheinlichkeit $L'_L(u_1)$, $L'_L(u_2)$, $L'_L(u_3)$ und $L'_L(u_4)$ ausgehend von Gleichung (59), (60), (61) und (62) unter Berücksichtigung von Gleichung (58) eingesetzt, so ergeben sich die in den Gleichungen (102), (103), (104) und (105) dargestellten mathematischen Beziehungen für die "extrinsische" logarithmierte Bit-Wahrscheinlichkeit $L_{EL}(u_1)$, $L_{EL}(u_2)$, $L_{EL}(u_3)$ und $L_{EL}(u_4)$ des ersten, zweiten, dritten und vierten Bits $u_1$, $u_2$, $u_3$ und $u_4$ des empfangenen Symbols $z$ bei einer 16QAM-Modulation:

$$L_{EL}(u_1) = \left( Q_1 + \frac{L_A(u_2)}{2} \right) \Omega \left( Q_2 - \frac{L_A(u_2)}{2} \right) - \left( Q_3 - \frac{L_A(u_2)}{2} \right) \Omega \left( Q_4 + \frac{L_A(u_2)}{2} \right) \qquad (102)$$

$$L_{EL}(u_2) = \left( Q_1 + \frac{L_A(u_1)}{2} \right) \Omega \left( Q_4 - \frac{L_A(u_1)}{2} \right) - \left( Q_2 + \frac{L_A(u_1)}{2} \right) \Omega \left( Q_3 - \frac{L_A(u_1)}{2} \right) \qquad (103)$$

$$L_{EL}(u_3) = \left( P_1 + \frac{L_A(u_4)}{2} \right) \Omega \left( P_2 - \frac{L_A(u_4)}{2} \right) - \left( P_3 - \frac{L_A(u_4)}{2} \right) \Omega \left( P_4 + \frac{L_A(u_4)}{2} \right) \qquad (104)$$

$$L_{EL}(u_4) = \left( P_1 + \frac{L_A(u_3)}{2} \right) \Omega \left( P_4 - \frac{L_A(u_3)}{2} \right) - \left( P_2 + \frac{L_A(u_3)}{2} \right) \Omega \left( P_3 - \frac{L_A(u_3)}{2} \right) \qquad (105)$$

Analog können die "extrinsischen" logarithmierten Bit-Wahrscheinlichkeiten $L_{EL}(u_1)$, $L_{EL}(u_2)$, $L_{EL}(u_3)$, $L_{EL}(u_4)$, $L_{EL}(u_5)$ und $L_{EL}(u_6)$ des ersten, zweiten, dritten, vierten, fünften und sechsten Bits $u_1$, $u_2$, $u_3$, $u_4$, $u_5$ und $u_6$ des empfangenen Symbols $z$ bei einer 16QAM-Modulation und die "extrinsischen" logarithmierten Bit-Wahrscheinlichkeiten $L_{EL}(u_1)$ und $L_{EL}(u_2)$ des ersten und zweiten Bits $u_1$ und $u_2$ des empfangenen Symbols $z$ bei einer QPSK-Modulation ermittelt werden.

In Fig. 11A ist das Flußdiagramm einer ersten Ausführungsform des erfindungsgemäßen Verfahrens zur Ermittlung einer Zuverlässigkeitsinformation über ein empfangenes Bit dargestellt, in dem die erfindungsgemäße Vorrichtung zur Ermittlung einer Zuverlässigkeitsinformationen über ein empfangenes Bit - Detektor - in Serie zwischen einem vorausgehenden Demodulator und einem nachfolgenden Dekodierer geschaltet ist.

Im ersten Verfahrensschritt S10 werden die reellen und imaginären Komponenten $z_R$ und $z_I$ des jeweils empfangenen und demodulierten Symbols z, das als analoges Signal vorliegt, mittels eines Demappers 2 bei Verwendung einer Signaldarstellung im Konstellationsdiagramm ermittelt.

Im darauf folgenden Verfahrensschritt S20 werde im Detektor aus den in Verfahrensschritt S10 ermittelten reellen und imaginären Komponenten $z_R$ und $z_I$ des jeweils empfangenen und demodulierten Symbols z unter Anwendung der Gleichungen (14) und (15) jedes Referenz-Symbol $S_m$ der bei der Übertragung verwendeten Modulation die jeweils zugehörigen horizontalen und vertikalen Metriken $H_m$ und $V_m$ berechnet. Bei Verwendung einer quadratischen Konstellation mit äquidistanten Abständen $2 \cdot \Delta$ zwischen den einzelnen Koordinaten $v_1, v_2, v_3$ und $v_4$ jedes Referenz-Symbols $S_m$ im Konstellationsdiagramm entsprechend der Gleichungen (81) bis (84) können die in der Tabelle in Fig. 10C aufgeführten mathematischen Beziehungen zur Berechnung der horizontalen und vertikalen Metriken $H_m$ und $V_m$, die eine reduzierte Anzahl von Operationen aufweisen, herangezogen werden.

Innerhalb des Verfahrenschrittes S20 werden aus den jeweils berechneten horizontalen und vertikalen Metriken $H_m$ und $V_m$ gemäß der Gleichungen (19) und (20) die zugehörigen logarithmierten horizontalen und vertikalen Symbol-Wahrscheinlichkeiten $P_m$ und $Q_m$ bei Anwendung eines Übertragungskanalmodelles mit weißem Gauß-verteilten Rauschen berechnet. Liegen andere Verhältnisse im Übertragungskanal vor, so sind andere Wahrscheinlichkeitsdichtefunktionen p(w) des Rauschens bei den Bestimmung der mathematischen Beziehungen für die logarithmierten horizontalen und vertikalen Symbol-Wahrscheinlichkeiten $P_m$ und $Q_m$ entsprechend Gleichung (19) und (20) anzusetzen.

Im abschließenden Verfahrensschritt S30 sind die einzelnen LLR-Werte (Log-Likelihood-Ratio) $L(u_k)$ als Zu-verlässigkeitsinformation über den Zustand eines zum empfangenen Symbol z gehörigen Bits $u_k$ aus den einzelnen horizontalen und vertikalen logarithmierten Symbol-Wahrscheinlichkeiten $P_m$ und $Q_m$ zu ermitteln. Bei einem vergleichsweise hohen numerische Aufwand und bei hoher numerischer Güte kommen hierzu die mathematischen Beziehungen für eine Berechnung in der Logarithmus-Ebene - LLR-Wert $L_L(u_k)$ - in den Gleichungen (26) bis (29) für eine verwendete 16 QAM-Modulation, in den Gleichungen (30) bis (35) für eine 64QAM-Modulation und in den Gleichungen (36) und (37) für eine QPSK-Modulation zur Anwendung. Werden geringere Anforderungen an die numerische Güte bei geringeren numerischen Aufwand gestellt, so können die mathematischen Beziehungen für eine Max-Log-Näherung - LLR-Wert $L_{ML}(u_k)$ - verwendet werden, die für eine 16 QAM-Modulation in den Gleichungen (39) bis (42) und für eine 64QAM-Modulation in den Gleichungen (43) bis (48) angegeben sind.

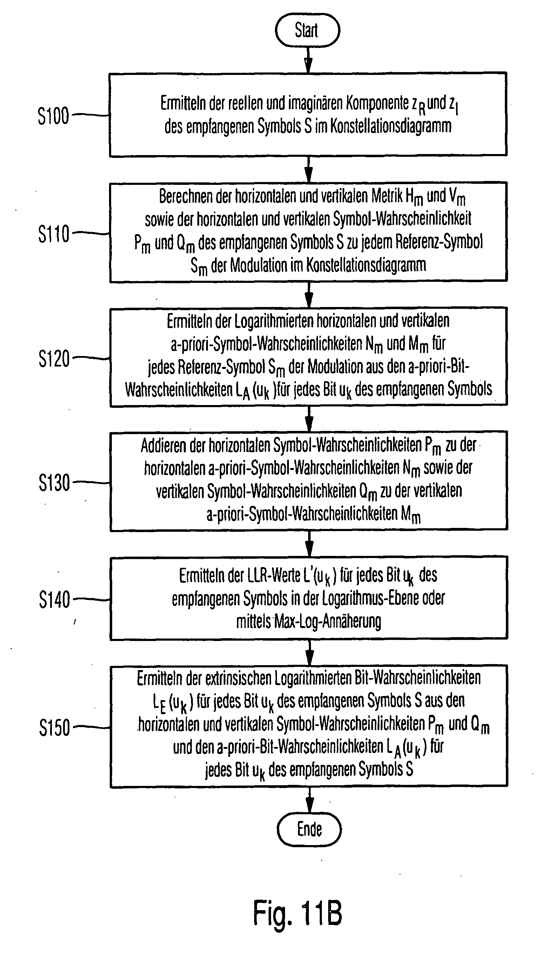

Die zweite Ausführungsform des erfindungsgemäßen Verfahrens zur Ermittlung einer Zuverlässigkeitsinformation über ein empfangenes Bit, dessen Flußdiagramm in Fig. 11B dargestellt ist, kommt bei einem Detektor zum Einsatz, der als erster Teil-Dekodierer mit einem zweiten Teil-Dekodierer einen iterativen Dekodierer (Turbo-Dekodierer) bildet. Hierbei werden zur iterativen Optimierung der Zuverlässlichkeitsinformation über den Zustand eines zum empfangenen Symbol z gehörigen Bits $u_k$ neben dem empfangenen Symbol z und den zugehörigen Bits $u_k$ auch die vom jeweils anderen Teil-Dekodierer ermittelte Zuverlässigkeitsinformation über das empfangene Bit $u_k$ als a-priori-Zuver-lässigkeitsinformationen über das empfangene Bit $u_k$ zusätzlich ausgewertet.

Die ersten Verfahrensschritten S100 und S110 der zweiten Ausführungsform des erfindungsgemäßen Verfahrens entsprechen den ersten Verfahrensschritten S10 und S20 der ersten Ausführungsform des erfindungsgemäßen Verfahrens und werden deshalb an dieser Stelle nicht mehr im Detail erklärt.

Im darauf folgenden Verfahrensschritten S120 werden aus den vom zweiten Teil-Dekodierer übermittelten a-priori-Bit-Wahrscheinlichkeiten $L_A(u_k)$ der einzelnen zum empfangenen Symbol z gehörigen Bits $u_k$ die zugehörigen logarithmierten horizontalen und vertikalen a-priori-Symbol-Wahrscheinlichkeiten $N_m$ und $M_m$ für jedes Referenz-Symbol $S_m$ der verwendeten Modulation im Konstellationsdiagramm ermittelt. Für eine 16QAM-Modulation sind die logarithmierten horizontalen und vertikalen a-priori-Symbol-Wahrscheinlichkeiten $N_m$ und $M_m$ beispielhaft in der Tabelle in Fig. 9 in mathematischer Abhängigkeit zu den einzelnen a-priori-Bit-Wahrscheinlichkeiten $L_A(u_k)$ dargestellt, wobei in der linken Spalte der Tabelle die rechenintensiveren mathematischen Beziehungen bei Verwendung einer vollen Metrik und in der rechten Spalte der Tabelle die mathematischen Beziehungen mit einer minimierten Anzahl von Operationen bei Verwendung einer symmetrischen Metrik aufgeführt sind.

Der darauf folgende Verfahrensschritt S130 beinhaltet die Addition der horizontalen logarithmierten Symbol-Wahrscheinlichkeit $P_m$ mit der horizontalen logarithmierten a-priori-Symbol-Wahrscheinlichkeit $N_m$ gemäß Gleichung (57) und die Addition der vertikalen logarithmierten Symbol-Wahrscheinlichkeit $Q_m$ mit der vertikalen logarithmierten a-priori-Symbol-Wahrscheinlichkeit $M_m$ gemäß Gleichung (58).

Analog zu Verfahrensschritt S30 in der ersten Ausführungsform des erfindungsgemäßen Verfahrens wird in Verfahrensschritt S140 der zweiten Ausführungsform des erfindungsgemäßen Verfahrens der LLR-Wert $L'(u_k)$ bei jedes Bit $u_k$ des empfangenen Symbols z als Zuverlässigkeitsinformation über den Zustand jedes empfangenen Bits $u_k$ be-rechnet. Bei hohem numerischen Aufwand und bei hoher numerischer Güte werden die LLR-Werte $L'_L(u_k)$ in der Log-arithmus-Ebene für eine 16QAM-Modulation entsprechend Gleichung (59) bis (62), für eine 64QAM-Modulation entsprechend Gleichung 63) bis (68) und für eine QPSK-Modulation entsprechend Gleichung (69) und (70) berechnet. Bei geringeren numerischer Güte und gleichzeitig aber einem reduzierten numerischen Aufwand können die LLR-Werte $L'_{ML}(u_k)$ mittels Max-Log-Näherung für eine 16QAM-Modulation gemäß der Gleichungen (71) bis (74) und für eine 64QAM-Modulation gemäß der Gleichungen (75) bis (80) ermittelt werden.

Die Ermittlung der für die Übertragung der a-priori-Symbol-Wahrscheinlichkeiten zwischen zwei Teil-Dekodierern eines iterativen Dekodierers üblichen extrinsischen logarithmierten Symbol-Wahrscheinlichkeiten $L_B(u_k)$ erfolgt im abschließenden Verfahrensschritt S150 durch Subtraktion der a-priori-Bit-Wahrscheinlichkeiten $L_A(u_k)$ für jedes Bit $u_k$ des empfangenen Symbols $z$ von der in Verfahrensschritts S160 ermittelten LLR-Werte $L'(u_k)$ am Ausgang des Teil-Dekodierers gemäß Gleichung (86), (88) bis (90) für eine 16QAM-Modulation bei voller Metrik, gemäß Gleichung (92) bis (97) bei einer 64 QAM-Modulation bei voller Metrik, gemäß Gleichung (99) und (100) bei einer QPSK-Modulation bei voller Metrik und gemäß Gleichung (102) bis (105) bei einer 16QAM-Modulation mit einer symmetrischen Metrik.

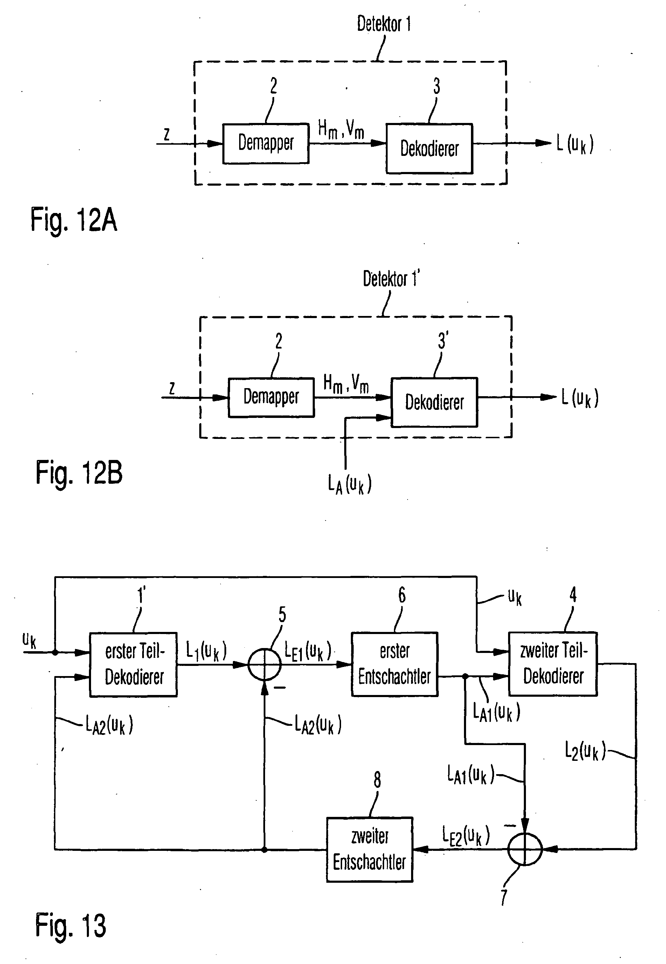

Die erste Ausführungsform der erfindungsgemäßen Vorrichtung gemäß Fig. 12A zur Ermittlung einer Zuverlässigkeitsinformation über den Zustand eines empfangenen Bits $u_k$ besteht aus einem Detektor 1, der einen Demapper 2 und eine nachgeschalteten Dekodierer 3 umfaßt. Dem Demapper 2 wird von einem Demodulator ein empfangenes und demoduliertes verrauschtes Symbol $z$ zugeführt, das als komplexes Analogsignal bei einer Darstellung im Konstellationsdiagramm vom Demapper 2 in seine reelle und imaginäre Komponente $z_R$ und $z_I$ zerlegt wird und darauf aufbauend die jeweilige horizontalen und vertikalen Metrik $H_m$ und $V_m$ zu jedem Referenz-Symbol $S_m$ der verwendeten Modulation ermittelt wird.

Im Dekodierer 3 wird aus den einzelnen horizontalen und vertikalen Metriken $H_m$ und $V_m$ für jedes Bit $u_k$ des empfangenen Symbols z der zugehörige LLR-Wert $L(u_k)$ als Zuverlässigkeitsinformation über den Zustand jedes Bits $u_k$ des empfangenen Symbols z berechnet.

In der zweiten Ausführungsform der erfindungsgemäßen Vorrichtung zur Ermittlung einer Zuverlässigkeitsinformation über den Zustand eines empfangenen Bits $u_k$ in Fig. 12B erhält der Dekodierer 3' im Gegensatz zum Dekodierer 3 der ersten Ausführungsform zusätzlich von einem in Fig. 12B nicht dargestellten zweiten Teil-Dekodierer 4 für jedes Bit $u_k$ des empfangenen Symbols $z$ eine a-priori-Bit-Wahrscheinlichkeit $L_A(u_k)$. Aus den einzelnen a-priori-Bit-Wahrscheinlichkeiten $L_A(u_k)$ ermittelt der Dekodierer 3 die horizontalen und vertikalen a-priori-Symbol-Wahrscheinlichkeiten $N_m$ und $M_m$ für jedes Referenz-Symbol $S_m$. Diese horizontalen und vertikalen a-priori-Symbol-Wahrscheinlichkeiten $N_m$ und $M_m$ werden zu den aus den horizontalen und vertikalen Metriken $H_m$ und $V_m$ ermittelten horizontalen und vertikalen Symbol-Wahrscheinlichkeiten $P_m$ und $Q_m$ dazuaddiert und gehen anschließend in die Berechnung der einzelnen LLR-Werte $L'(u_k)$ für jedes Bit $u_k$ des empfangenen Symbols $z$ ein.

In Fig. 13 ist das Blockschaltbild eines erfindungsgemäßen iterativen Dekodierers dargestellt, in dem die zweite Ausführungsform der erfindungsgemäßen Vorrichtung zur Ermittlung einer Zuverlässigkeitsinformation über den Zustand eines empfangen Bits $u_k$ - Detektor 1'- als erster Teil-Dekodierer 1' zum Einsatz kommt. Der vom ersten Teil-Dekodierer 1' jeweils ermittelte LLR-Wert $L_1(u_k)$ wird einem ersten Subtrahierer 5 zugeführt, in dem eine vom zweiten Teil-Dekodierer 4 ermittelte a-priori-Bit-Wahrscheinlichkeit $L_{A2}(u_k)$ vom ersten Teil-Dekodierer 1' ermittelter LLR-Wert $L_1(u_k)$ zur Bildung einer extrinsischen logarithmierten Bit-Wahrscheinlichkeit $L_B(u_k)$ subtrahiert wird. Diese extrinsische logarithmierte Bit-Wahrscheinlichkeit $L_B(u_k)$ wird über einen ersten Entschachtler 6 im übertragenen Bitstrom als a-priori-Bit-Wahrscheinlichkeit $L_{A1}(u_k)$ dem zweiten Teil-Dekodierer 4 zugeführt, der zusammen mit dem empfangenen Bit $u_k$ den entsprechenden LLR-Wert $L_2(u_k)$ berechnet. Ein dem zweiten Teil-Dekodierer 4 nachfolgender zweiten Subtrahierer 7 subtrahiert zur Bildung einer extrinsischen logarithmierten Bit-Wahrscheinlichkeit $L_{B2}(u_k)$ die dem zweiten Teil-Dekodierer 4 zugeführte a-priori-Bit-Wahrscheinlichkeit $L_{A1}(u_k)$ vom LLR-Wert $L_2(u_k)$ des zweiten Teil-Dekodierers 4. Die extrinsische logarithmierte Bit-Wahrscheinlichkeit $L_{B2}(u_k)$ wird einem zweiten Entschachtler 8 im übertragenen Bitstrom zugeführt, der an seinem Ausgang die a-priori-Bit-Wahrscheinlichkeit $L_{A2}(u_k)$ für den ersten Teil-Dekodierer 1' erzeugt.

Das erfindungsgemäße Verfahren und die erfindungsgemäße Vorrichtung zur Ermittlung einer Zuverlässigkeitsinformation über den Zustand eines empfangenen Bits z ist gegenüber dem Stand der Technik mit einem deutlich niedrigeren numerischen Aufwand verbunden.

Bei einem Verfahren und einer Vorrichtung nach dem Stand der Technik sind für beispielsweise eine 64QAM-Modulation und bei Anwendung der MAX-Log-Näherung insgesamt 64 Metriken zu berechnen und anschließend für die Berechnung des LLR-Wertes jedes der 6 Bits eines empfangenen 64QAMmodulierten Symbols zweimal aus jeweils 32 logarithmierten Symbol-Wahrscheinlichkeiten ein Maximum zu ermitteln und anschließend die Differenz der beiden ermittelten Maximas zu bilden.

Beim dargestellten erfindungsgemäßen Verfahren und erfindungsgemäßen Vorrichtung sind dagegen nur 16 Metrik-Berechnungen - 8 horizontale und 8 vertikale Metriken - durchzuführen und anschließend für die Berechnung des LLR-Wertes jedes der 6 Bits eines empfangenen 64QAMmodulierten Symbols zweimal aus jeweils 4 logarithmierten horizontalen oder vertikalen Symbol-Wahrscheinlichkeiten ein Maximum zu ermitteln und anschließend die Differenz der beiden ermittelten Maximas zu bilden.

Bei Anwendung einer 1024QAM-Modukation und einer Max-Log-Näherung reduziert sich der numerische Aufwand bei einem Verfahren bzw. einer Vorrichtung nach dem Stand der Technik von 1024 Metrik-Berechnungen zuzüglich einer zweimaligen Maximum-Bestimmung aus jeweils 512 Metrik-Werten und einer anschließenden Differenzbildung auf 20 Metrik-Berechnungen zuzüglich eine zweimalige Maximum-Bestimmung aus jeweils 5 Werten und eine abschließende Differenzbildung bei einem erfindungsgemäßen Verfahren und einer erfindungsgemäßen Vorrichtung.

Die Erfindung ist nicht auf die dargestellten Ausführungsformen beschränkt. Die Erfindung deckt auch Modulationsarten höherer Ordnung, beispielsweise 128-QAM, 256-QAM usw., ab. Die Erfindung deckt auch iterative Dekodierer ab, in denen der zweite Teil-Dekodierer aus zwei seriell oder parallel verketteten Teil-Dekodierern oder wiederum aus einem iterativen Dekodierer besteht. Neben der MAX-Log-Näherung werden auch andere numerische Verfahren von der Erfindung abgedeckt, die die hohe mathematische Komplexität bei der Berechnung logarithmischer Bit-Wahrscheinlichkeiten reduzieren.

**Patentansprüche**

1. Verfahren zur Ermittlung einer Zuverlässigkeitsinformation über einen Zustand eines empfangenen Bits ($u_k$) eines nachrichtentechnischen Signals mit einer Bitposition (k) in einem mit einer Modulation kodierten Empfangs-Symbol (z),
   indem eine Symbol-Wahrscheinlichkeit ($p(S_m|z)$) des Empfangs-Symbols (z) für jedes Referenz-Symbol ($S_m$) der Modulation mittels einer Metrik ($D_m$) zwischen dem Empfangs-Symbol (z) und dem jeweiligen Referenz-Symbol ($S_m$) berechnet wird und die Zuverlässigkeitsinformation eine Log-Likelihood-Ratio ($L_L(u_k),(L_{ML}(u_k);(L_L'(u_k),(L_{ML}'(u_k))$) des empfangenen Bits ($u_k$) ist und aus einer Differenz zwischen denjenigen additiv verknüpften Symbol-Wahrscheinlichkeiten ($p(S_m|u_k=1)$), deren Referenz-Symbol ($S_m$) an der Bitposition ($k$) ein Bit ($u_k$) mit einem aktivierten Zustand aufweist, und denjenigen additiv verknüpften Symbol-Wahrscheinlichkeiten ($p(S_m|u_k=0)$), deren Referenz-Symbole ($S_m$) an der Bitposition ($k$) ein Bit ($u_k$) mit einem nicht-aktivierten Zustand aufweist, berechnet wird,
   wobei die jeweilige Metrik ($D_m$) aus einer horizontalen Metrik ($H_m$) und einer vertikalen Metrik ($V_m$) des Empfangs-Symbols (z) zum jeweiligen Referenz-Symbol ($S_m$) besteht und
   wobei die Symbol-Wahrscheinlichkeit ($p(S_m|z)$) aus einer logarithmierten, von der horizontalen Metrik ($H_m$) abhängigen Symbol-Wahrscheinlichkeit ($P_m$) und aus einer logarithmierten, von der vertikalen Metrik ($V_m$) abhängigen Symbol-Wahrscheinlichkeit ($Q_m$) besteht,
   **dadurch gekennzeichnet,**
   **dass** die Zuordnung der einzelnen Referenz-Symbole ($S_m$) im Konstellationsdiagramm eine quadratische Zuordnung ist, bei der die Referenz-Symbole ($S_m$) in der gleichen Zeile oder der gleichen Spalte in der Hälfte der Bits ($u_k$) identisch sind, und eine der Zeilenanzahl im Konstellationsdiagramm entsprechende Anzahl von logarithmierten, von der vertikalen Metrik ($V_m$) abhängigen Symbol-Wahrscheinlichkeiten ($Q_m$) und eine der Spaltenanzahl im Konstellationsdiagramm entsprechende Anzahl von logarithmierten, von der horizontalen Metrik ($H_m$) abhängigen Symbol-Wahrscheinlichkeiten ($P_m$) ermittelt wird.

2. Verfahren zur Ermittlung einer Zuverlässigkeitsinformation über einen Zustand eines empfangenen Bits ($u_k$) eines nachrichtentechnischen Signals mit einer Bitposition (k) in einem mit einer Modulation kodierten Empfangs-Symbol (z),
   indem eine Symbol-Wahrscheinlichkeit ($p(S_m|z)$) des Empfangs-Symbols (z) für jedes Referenz-Symbol ($S_m$) der Modulation mittels einer Metrik ($D_m$) zwischen dem Empfangs-Symbol (z) und dem jeweiligen Referenz-Symbol ($S_m$) berechnet wird und die Zuverlässigkeitsinformation eine Log-Likelihood-Ratio ($L_L(u_k),L_{ML}(u_k);L_L'(u_k),L_{ML}'(u_k)$) des empfangenen Bits ($u_k$) ist und aus einer Differenz zwischen der maximalen Symbol-Wahrscheinlichkei t ($p(S_m|u_k=1)$) aus allen Symbol-Wahrscheinlichkeiten ($p(S_m|u_k=1)$), deren Referenz-Symbol ($S_m$) an der Bitposition ($k$) ein Bit ($u_k$) mit einem aktivierten Zustand aufweist, und der maximalen Symbol-Wahrscheinlichkeit ($p(S_m|u_k=0)$) aus allen Symbol-Wahrscheinlichkeiten ($p(S_m|u_k=0)$), deren Referenz-Sym-bole ($S_m$) an der Bitposition ($k$) ein Bit ($u_k$) mit einem nicht-aktivierten Zustand aufweist, berechnet wird,
   wobei die jeweilige Metrik ($D_m$) aus einer horizontalen Metrik ($H_m$) und einer vertikalen Metrik ($V_m$) des Empfangs-Symbols (z) zum jeweiligen Referenz-Symbol ($S_m$)
   besteht und
   wobei die Symbol-Wahrscheinlichkeit ($p(S_m|z)$) aus einer logarithmierten, von der horizontalen Metrik ($H_m$) abhängigen Symbol-Wahrscheinlichkeit ($P_m$) und aus einer logarithmierten, von der vertikalen Metrik ($V_m$) abhängigen Symbol-Wahrscheinlichkeit ($Q_m$) besteht,
   **dadurch gekennzeichnet,**
   **dass** die Zuordnung der einzelnen Referenz-Symbole ($S_m$) im Konstellationsdiagramm eine quadratische Zuordnung ist, bei der die Referenz-Symbole ($S_m$) in der gleichen Zeile oder der gleichen Spalte in der Hälfte der Bits ($u_k$) identisch sind, und eine der Zeilenanzahl im Konstellationsdiagramm entsprechende Anzahl von logarithmierten, von der vertikalen Metrik ($V_m$) abhängigen Symbol-Wahrscheinlichkeiten ($Q_m$) und eine der Spaltenanzahl im Konstellationsdiagramm entsprechende Anzahl von logarithmierten, von der horizontalen Metrik ($H_m$) abhängigen Symbol-Wahrscheinlichkeiten ($P_m$) ermittelt wird.

3. Verfahren zur Ermittlung einer Zuverlässigkeitsinformation nach Anspruch 1 oder 2,
   **dadurch gekennzeichnet,**
   **daß** die Zuordnung eine Gray-Bit-Zuordnung ist.

4. Verfahren zur Ermittlung einer Zuverlässigkeitsinformation nach einem der Ansprüche 1 bis 3,
   **dadurch gekennzeichnet,**
   **daß** die Log-Likelihood-Ratio ($L_L(u_k)$) des empfangenen Bits ($u_k$) sich im Fall einer quadratischen Zuordnung und einer Berechnung der Zuverlässigkeitsinformation aus additiv verknüpften Symbol-Wahrscheinlichkeiten ($p(S_m|z)$) nach folgender Formel berechnet:

$$L_L(u_k) = \log\left(\sum_{n=1|\mu_k=0}^{K} \exp(\log(f(H_n)))\right) - \log\left(\sum_{n=1|\mu_k=1}^{K} \exp(\log(f(H_n)))\right)$$

   wobei

   $f(H_n)$ die Funktion zur Berechnung der von der horizontalen Metrik $H_m$ abhängigen Symbol- Wahrscheinlichkeit $P_n$ des Empfangs-Symbols $z$ zur Spalte von Referenz-Symbolen $S_n$ im Konstel- lationsdiagramm und
   $K$ die Anzahl der Spalten des Konstellationsdia- gramms ist.

5. Verfahren zur Ermittlung einer Zuverlässigkeitsinformation nach einem der Ansprüche 1 bis 4,
   **dadurch gekennzeichnet,**
   **daß** die Log-Likelihood-Ratio ($L_L(u_k)$) des empfangenen Bits ($u_k$) sich im Fall der quadratischen Zuordnung und einer Berechnung der Zuverlässigkeitsinformation aus additiv verknüpften Symbol-Wahrscheinlichkeiten ($p(S_m|z)$) nach folgender Formel berechnet:

$$L_L(u_k) = \log\left(\sum_{n=1|\mu_k=0}^{K} \exp(\log(f(V_n)))\right) - \log\left(\sum_{m=1|\mu_k=1}^{K} \exp(\log(f(V_n)))\right)$$

   wobei

   $f(V_n)$ die Funktion zur Berechnung der von der vertikalen Metrik ($V_m$) abhängigen Symbol-Wahr- scheinlichkeit ($Q_m$) des Empfangs-Symbols $z$ zur Zeile von Referenz-Symbolen $S_n$ im Konstel- lationsdiagramm und
   $K$ die Anzahl der Zeilen des Konstellationsdia- gramms ist.

6. Verfahren zur Ermittlung einer Zuverlässigkeitsinformation nach einem der Ansprüche 1 bis 5,
   **dadurch gekennzeichnet,**
   **daß** die Log-Likelihood-Ratio ($L_{ML}(u_k)$) des empfangenen Bits ($u_k$) sich im Fall der quadratischen Zuordnung und einer Berechnung der Zuverlässigkeitsinformation aus maximalen Symbol-Wahrscheinlichkeiten ($p(S_m|z)$) nach folgender Formel berechnet:

$$L_{ML}(u_k) = \max_{n=1\ldots K|\mu_k=0}\left\{\log(f(H_n)\right\} - \max\left\{\log_{n=1\ldots K|\mu_k=1}(f(H_n)\right\}$$

7. Verfahren zur Ermittlung einer Zuverlässigkeitsinformation nach einem der Ansprüche 1 bis 5,
   **dadurch gekennzeichnet,**
   **daß** die Log-Likelihood-Ratio ($L_{ML}(u_k)$) des empfangenen Bits ($u_k$) sich im Fall der quadratischen Zuordnung und einer Berechnung der Zuverlässigkeitsinformation aus maximalen Symbol-Wahrscheinlichkeiten ($p(S_m|z)$) nach folgender Formel berechnet:

$$L_{ML}(u_k) = \max_{n=1\ldots K|u_k=0}\left\{\log(f(V_n))\right\} - \max_{n=1\ldots K|u_k=1}\left\{\log(f(V_n))\right\}$$

**8.** Verfahren zur Ermittlung einer Zuverlässigkeitsinformation nach einem der Ansprüche 1 bis 7,
**dadurch gekennzeichnet,**
**daß** in einem Übertragungskanal, in dem die Metrik ($D_m$) in eine horizontale Metrik ($H_m$) und eine vertikale Metrik ($V_m$) zerlegbar ist, die horizontale Metrik- ($H_m$) die horizontale euklidische Distanz (($x$-$x_m$)$^2$) des empfangenen Symbols zu einer Zeile von Referenz-Symbolen ($S_m$) und die vertikale Metrik ($V_m$) die vertikale euklidische Distanz ($y$-$y_m$)$^2$ des empfangenen Symbols ($z$) zu einer Spalte von Referenz-Symbolen ($S_m$) im Konstellationsdiagramm darstellt, wobei

> $x$ die reelle Koordinate des Empfangs-Symbols $z$ im Konstellationsdiagramm,
> $x_m$ die reelle Koordinate des Referenz-Symbols $S_m$ im Konstellationsdiagramm,
> $y$ die imaginäre Koordinate des Empfangs-Symbols $z$ im Konstellationsdiagramm, und
> $y_m$ die imaginäre Koordinate des Referenz-Symbols $S_m$ im Konstellationsdiagramm

ist.

**9.** Verfahren zur Ermittlung einer Zuverlässigkeitsinformation nach Anspruch 8,
**dadurch gekennzeichnet,**
**dass** sich im Fall einer quadratischen Zuordnung und einer Berechnung der Zuverlässigkeitsinformation aus additiv verknüpften Symbol-Wahrscheinlichkeiten ($p(S_m|z)$) und eines Übertragungskanals mit einer in eine horizontale Metrik ($H_m$) und eine vertikale Metrik ($V_m$) zerlegbaren Metrik ($D_m$) die Log-Likelihood-Ratio ($L_L(u_k)$) des empfangenen Bits ($u_k$) nach folgender Formel berechnet:

$$L_L(u_k) = \log\left(\sum_{\substack{n=1\\u_k=0}}^{K}\exp(-\frac{(y-y_n)^2}{\sigma^2})\right) - \log\left(\sum_{\substack{n=1\\u_k=1}}^{K}\exp(-\frac{(y-y_n)^2}{\sigma^2})\right)$$

**10.** Verfahren zur Ermittlung einer Zuverlässigkeitsinformation nach Anspruch 8,
**dadurch gekennzeichnet,**
**daß** sich im Fall einer quadratischen Zuordnung und einer Berechnung der Zuverlässigkeitsinformation aus additiv ver-knüpften Symbol-Wahrscheinlichkeiten ($p(S_m|z)$) und eines Übertragungskanal mit einer in eine horizontale Metrik ($H_m$) und eine vertikale Metrik ($V_m$) zerlegbaren Metrik ($D_m$) die Log-Likelihood-Ratio ($L_L(u_k)$) des empfangenen Bits ($u_k$) nach folgender Formel berechnet:

$$L_L(u_k) = \log\left(\sum_{\substack{n=1\\u_k=0}}^{K}\exp(-\frac{(x-x_n)^2}{\sigma^2})\right) - \log\left(\sum_{\substack{n=1\\u_k=1}}^{K}\exp(-\frac{(x-x_n)^2}{\sigma^2})\right)$$

**11.** Verfahren zur Ermittlung einer Zuverlässigkeitsinformation nach Anspruch 8,
**dadurch gekennzeichnet,**
**daß** im Fall einer quadratischen Zuordnung und eines Übertragungskanal mit einer in eine horizontale Metrik ($H_m$) und eine vertikale Metrik ($V_m$) zerlegbaren Metrik ($D_m$) und bei einer Berechnung der Zuverlässigkeitsinformation aus maximalen Symbol-Wahrscheinlichkeiten ($p(S_m|z)$) die Log-Likelihood-Ratio ($L_{ML}(u_k)$) des empfangenen Bits ($u_k$) sich nach folgender Formel berechnet:

$$L_{ML}(u_k) = \max_{n=1\ldots K|u_k=0}\left\{-\frac{(y-y_n)^2}{\sigma^2}\right\} - \max_{n=1\ldots K|u_k=1}\left\{-\frac{(y-y_n)^2}{\sigma^2}\right\}$$

**12.** Verfahren zur Ermittlung einer Zuverlässigkeitsinformation nach Anspruch 8,
**dadurch gekennzeichnet,**
**daß** im Fall einer quadratischen Zuordnung und eines Übertragungskanal mit einer in eine horizontale Metrik ($H_m$) und eine vertikale Metrik ($V_m$) zerlegbaren Metrik ($D_m$)
und bei einer Berechnung der Zuverlässigkeitsinformation aus maximalen Symbol-Wahrscheinlichkeiten ($p(S_m|z)$) sich die Log-Likelihood-Ratio ($L_{ML}(u_k)$) des empfangenen Bits ($u_k$) nach folgender Formel berechnet:

$$L_{ML}(u_k) = \max_{n=1\ldots K|u_k=0}\left\{-\frac{(x-x_n)^2}{\sigma^2}\right\} - \max_{n=1\ldots K|u_k=1}\left\{-\frac{(x-x_n)^2}{\sigma^2}\right\}$$

**13.** Verfahren zur Ermittlung einer Zuverlässigkeitsinformation nach einem der Ansprüche 1 bis 12,
**dadurch gekennzeichnet,**
das im Fall einer quadratischen Zuordnung und eines Übertragungskanals mit einer in eine horizontale Metrik ($H_m$) und eine vertikale Metrik ($V_m$) zerlegbaren Metrik ($D_m$) zur horizontalen logarithmierten Symbol-Wahrscheinlichkeit ($P_m$) eine logarithmierte, horizontale a-priori-Symbol-Wahrscheinlichkeit ($N_m$) und zur vertikalen logarithmierten Symbol-Wahrscheinlichkeit ($Q_m$) eine logarithmierte, vertikale a-prioriSymbol-Wahrscheinlichkeit ($N_m$) addiert wird.

**14.** Verfahren zur Ermittlung einer Zuverlässigkeitsinformation nach Anspruch 13,
**dadurch gekennzeichnet,**
**dass** die logarithmierte vertikale a-priori-Symbol-Wahrscheinlichkeit ($M_m$) aus logarithmierten a-priori-Bit-Wahrscheinlichkeiten ($L_A(u_k)$) derjenigen Bits ($u_k$) des Referenz-symbols ($S_m$), die für die jeweilige Zeile von Referenz-Symbolen ($S_m$) im Konstellationsdiagramm bestimmend und aktiviert sind, und die logarithmierte horizontale a-priori-Symbol-Wahrscheinlichkeit ($N_m$) aus logarithmierten a-priori-Bit-Wahrscheinlichkeiten ($L_A(u_k)$) derjenigen Bits ($u_k$) des Referenz-Symbols ($S_m$), die für die jeweilige Spalte von Referenz-Symbolen ($S_m$) im Konstellationsdiagramm bestimmend und aktiviert sind, berechnet werden.

**15.** Verfahren zur Ermittlung einer Zuverlässigkeitsinformation nach einem der Ansprüche 1 bis 14,
**dadurch gekennzeichnet,**
**daß** der Übertragungskanal mit einer in eine horizontale Metrik ($H_m$) und eine vertikale Metrik ($V_m$) zerlegbaren Metrik ($D_m$) ein Übertragungskanal mit einem überlagerten weißen Gauß-verteilten Rauschen ist.

**16.** Verfahren zur Ermittlung einer Zuverlässigkeitsinformation nach einem der Ansprüche 1 bis 15,
**dadurch gekennzeichnet,**
**daß** die Zuverlässigkeitsinformation über den Zustand eines empfangenen Bits ($u_k$) in der k-ten Bitposition eines Empfangs-Symbols (z) eine extrinsische Log-Likelihood-Ratio ($L_E(u_k),L_{EL}(U_k)$) des empfangenen Bits ($u_k$) ist, die sich aus einer Subtraktion der logarithmierten a-priori-Bit-Wahrscheinlichkeit ($L_A(U_k)$) des jeweiligen Bits ($u_k$) von der Log-Likelihood-Ratio ($L'_L(u_k)$) des empfangenen Bits ($u_k$) am Ausgang eines Teil-Dekodierers eines iterativen Dekodierers ergibt.

**17.** Vorrichtung zur Ermittlung einer Zuverlässigkeitsinformation über einen Zustand eines empfangenen Bits ($u_k$) in einem mit einer Modulation kodierten Empfangs-Symbol (z) eines nachrichtentechnischen Signals, bestehend aus einem Demapper (2) zur Ermittlung jeweils einer Metrik ($D_m$) zwischen dem Empfangs-Symbol (z) und jedem der in der Modulation verwendeten Referenz-Symbole ($S_m$) und einem Dekodierer (3;3') zur Ermittlung einer Log-Likelihood-Ratio ($L_L(u_k),L_{ML}(u_k);L_L'(U_k),L_{ML}'(u_k)$) für jedes Bit ($u_k$) des Empfangs-Symbols (z), wobei die Metrik ($D_m$) aus einer horizontalen Metrik ($H_m$) und einer vertikalen Metrik ($V_m$) des Empfangs-Symbols (z) zum jeweiligen Referenz-Symbol ($S_m$) besteht,
**dadurch gekennzeichnet,**

**dass** die Zuordnung der einzelnen Referenz-Symbole ($S_m$) im Konstellationsdiagramm eine quadratische Zuordnung ist, bei der die Referenz-Symbole ($S_m$) in der gleichen Zeile oder der gleichen Spalte in der Hälfte der Bits ($u_k$) identisch sind, und der Dekodierer derart ausgestaltet ist, um eine der Zeilenanzahl im Konstellationsdiagramm entsprechende Anzahl von logarithmierten, von der vertikalen Metrik ($V_m$) abhängigen Symbol-Wahrscheinlichkeiten ($Q_m$) und eine der Spaltenanzahl im Konstellationsdiagramm entsprechende Anzahl von logarithmierten, von der horizontalen Metrik ($H_m$) abhängigen Symbol-Wahrscheinlichkeiten ($P_m$) zu ermitteln.

18. Iterativer Dekodierer bestehend aus einem ersten Teil-Dekodierer (3;3') und einem zweiten Teil-Dekodierer (4) zur Ermittlung jeweils einer Zuverlässigkeitsinformation ($L_1(u_k), L_2(u_k)$) über ein Bit ($u_k$) in einem Empfangs-Symbol (z), wobei der erste bzw. zweite Teil-Dekodierer (3;3',4) aus dem Bit ($u_k$) im empfangenen Symbol (z) und einer vom zweiten bzw. ersten Teil-Dekodierer ermittelten Zuverlässigkeitsinformation ($L_{A2}(u_k), L_{A1}(u_k)$) über das Bit ($u_k$) im empfangenen Symbol (z) jeweils die Zuverlässigkeitsinformation ($L_1(u_k), L_2(u_k)$) über das Bit ($u_k$) im empfangenen Symbol (z) ermittelt,
**dadurch gekennzeichnet,**
**dass** der erste Teil-Dekodierer (3;3') eine Vorrichtung zur Ermittlung einer Zuverlässigkeitsinformation ($L_1(u_k)$) nach Anspruch 17 ist, wobei die Zuverlässigkeitsinformation ($L_1(u_k)$) eine Log-Likelihood-Ratio ($L_L(u_k), L_{ML}(u_k); L_L'(u_k), L_{ML}'(u_k)$) ist.

19. Iterativer Dekodierer nach Anspruch 18,
**dadurch gekennzeichnet,**
**daß** ein erster Subtrahierer (5) eine vom zweiten Teil-Dekodierer (4) ermittelte Zuverlässigkeitsinformation ($L_{A2}(u_k)$) über das Bit ($u_k$) im Empfangs-Symbol (z) von der vom ersten Teil-Dekodierer (3,3') ermittelten Zuverlässigkeitsinformation ($L_L(u_k), L_{ML}(u_k); L_L'(u_k), L_{ML}'(u_k)$) über das Bit ($u_k$) im Empfangs-Symbol (z) subtrahiert und ein zweiter Subtrahierer (7) die vom ersten Teil-Dekodierer (4) ermittelte Zuverlässigkeitsinformation ($L_{A1}(u_k)$) über das Bit ($u_k$) im Empfangs-Symbol (z) von der vom zweiten Teil-Dekodierer (4) ermittelten Zuverlässigkeitsinformation ($L_2(u_k)$) subtrahiert.

## Claims

1. Method for determining a reliability characteristic for a status of a received bit ($u_k$) of a communications signal with a bit position (k) in a received symbol (z) coded with a modulation,
in that a symbol probability ($p(S_m|z)$) of the received symbol (z) is calculated for every reference symbol ($S_m$) of the modulation by means of a metric ($D_m$) between the received symbol (z) and the respective reference symbol ($S_m$), and that the reliability characteristic is a log-likelihood ratio ($L_L(u_k), L_{ML}(u_k); L_L'(u_k), L_{ML}'(u_k)$) of the received bit ($u_k$) and is calculated from a difference between those additively-linked symbol probabilities ($p(S_m|u_k=1)$), of which the reference symbol ($S_m$) at the bit position (k) provides a bit ($u_k$) with an activated status and those additively-linked symbol probabilities ($p(S_m|u_k=0)$), of which the reference symbol ($S_m$) at the bit position (k) provides a bit ($u_k$) with a non-activated status,
wherein the respective metric ($D_m$) consists of a horizontal metric ($H_m$) and a vertical metric ($V_m$) of the received symbol (z) relative to the respective reference symbol ($S_m$) and wherein the symbol probability ($p(S_m|z)$) consists of a log symbol probability ($Pm$) dependent upon the horizontal metric ($H_m$) and a log symbol probability ($Q_m$) dependent upon the vertical metric ($V_m$),
**characterised in that**
the allocation of the individual reference symbols ($S_m$) in the constellation diagram is a square allocation, in which the reference symbols ($S_m$) in the same line or the same column are identical in half of the bits ($u_k$), and a number corresponding to the line number in the constellation diagram of log symbol probabilities ($Q_m$) dependent upon the vertical metric ($V_m$) and a number corresponding to the column number in the constellation diagram of log symbol probabilities ($P_m$) dependent upon the horizontal metric ($H_m$), is determined.

2. Method for determining a reliability characteristic for a status of a received bit ($u_k$) of a communications signal with a bit position (k) in a received symbol (z) coded with a modulation,
in that a symbol probability ($p(S_m|z)$) of the received symbol (z) is calculated for every reference symbol ($S_m$) of the modulation by means of a metric ($D_m$) between the received symbol (z) and the respective reference symbol ($S_m$), and the reliability characteristic is a log-likelihood ratio ($L_L(u_k), L_{ML}(u_k); L_L'(u_k), L_{ML}'(u_k)$) of the received bit ($u_k$) and is calculated from a difference between the maximal symbol probability ($p(S_m|u_k=1)$) of all symbol probabilities ($p(S_m|u_k=1)$), of which the reference symbol ($S_m$) at the bit position (k) provides a bit ($u_k$) with an activated status, and the maximal symbol probability ($p(S_m|u_k=0)$) of all symbol probabilities ($p(S_m|u_k=0)$), of which the reference symbol

$(S_m)$ at the bit position (k) provides a bit $(u_k)$ with a non-activated status,
wherein the respective metric $(D_m)$ consists of a horizontal metric $(H_m)$ and a vertical metric $(V_m)$ of the received symbol $(z)$ relative to the respective reference symbol $(S_m)$ and
wherein the symbol probability $(p(S_m|z))$ consists of a log symbol probability $(P_m)$ dependent upon the horizontal metric $(H_m)$ and a log symbol probability $(Q_m)$ dependent upon the vertical metric $(V_m)$,
**characterised in that**
the allocation of the individual reference symbols $(S_m)$ in the constellation diagram is a square allocation, in which the reference symbols $(S_m)$ in the same line or the same column are identical in half of the bits $(u_k)$, and a number corresponding to the line number in the constellation diagram of log symbol probabilities $(Q_m)$ dependent upon the vertical metric $(V_m)$ and a number corresponding to the column number in the constellation diagram of log symbol probabilities $(P_m)$ dependent upon the horizontal metric $(H_m)$ is determined.

3. Method for determining a reliability characteristic according to claim 1 or 2,
   **characterised in that**
   the allocation is a gray-bit allocation.

4. Method for determining a reliability characteristic according to any one of claims 1 to 3,
   **characterised in that**
   the log-likelihood ratio $(L_L(u_k))$ of the received bit $(u_k)$ is calculated in the case of a square allocation and a calculation of the reliability characteristic from additively-linked symbol probabilities $(p(S_m|z))$ according to the following formula:

$$L_L(u_k) = \log\left( \sum_{n=1||u_k=0}^{K} \exp(\log(f(H_n))) \right) - \log\left( \sum_{n=1||u_k=1}^{K} \exp(\log(f(H_n))) \right)$$

wherein

   $f(H_n)$ denotes the function for calculating the symbol probability $P_n$ of the received symbol $z$ dependent upon the horizontal metric $H_m$ relative to the column of reference symbols $S_n$ in the constellation diagram; and
   $K$ denotes the number of columns of the constellation diagram.

5. Method for determining a reliability characteristic according to any one of claims 1 to 4,
   **characterised in that**
   the log-likelihood ratio $(L_L(u_k))$ of the received bit $(u_k)$ is calculated in the case of a square allocation and a calculation of the reliability characteristic from additively-linked symbol probabilities $(p(S_m|z))$ according to the following formula:

$$L_L(u_k) = \log\left( \sum_{n=1||u_k=0}^{K} \exp(\log(f(V_n))) \right) - \log\left( \sum_{m=1||u_k=1}^{K} \exp(\log(f(V_n))) \right)$$

wherein

   $f(V_n)$ denotes the function for calculating the symbol probability $(Q_m)$ of the received symbol $z$ dependent upon the vertical metric $V_m$ relative to the line of reference symbols $S_n$ in the constellation diagram; and
   $K$ denotes the number of lines of the constellation diagram.

6. Method for determining a reliability characteristic according to any one of claims 1 to 5,
   **characterised in that**
   the log-likelihood ratio $(L_{ML}(u_k))$ of the received bit $(u_k)$ is calculated in the case of the square allocation and a calculation of the reliability characteristic from maximal symbol probabilities $(p(S_m|z))$ according to the following formula:

$$L_{ML}(u_k) = \max_{n=1\ldots K|u_k=0} \left\{ \log(f(H_n)) \right\} - \max \left\{ \log_{n=1\ldots K|u_k=1}(f(H_n)) \right\}$$

7. Method for determining a reliability characteristic according to any one of claims 1 to 5,
   **characterised in that**
   the log-likelihood ratio ($L_{ML}(u_k)$) of the received bit ($u_k$) is calculated in the case of the square allocation and a calculation of the reliability characteristic from maximal symbol probabilities ($p(S_m|z)$) according to the following formula:

$$L_{ML}(u_k) = \max_{n=1\ldots K|u_k=0} \left\{ \log(f(V_n)) \right\} - \max_{n=1\ldots K|u_k=1} \left\{ \log(f(V_n)) \right\}$$

8. Method for determining a reliability characteristic according to any one of claims 1 to 7,
   **characterised in that,**
   in a transmission channel, in which the metric ($D_m$) is capable of being analysed into a horizontal metric ($H_m$) and a vertical metric ($V_m$), the horizontal metric ($H_m$) represents the horizontal Euclidean distance (($x-x_m)^2$) of the received symbol relative to a line of reference symbols ($S_m$), and the vertical metric ($V_m$) represents the vertical Euclidean distance (($y-y_m)^2$) of the received symbol ($z$) relative to a column of reference symbols ($S_m$) in the constellation diagram, wherein

   > $x$ denotes the real coordinate of the received symbol $z$ in the constellation diagram;
   > $x_m$ denotes the real coordinate of the reference symbol $S_m$ in the constellation diagram;
   > $y$ denotes the imaginary coordinate of the received symbol $z$ in the constellation diagram; and
   > $y_m$ denotes the imaginary coordinate of the reference symbol $S_m$ in the constellation diagram.

9. Method for determining a reliability characteristic according to claim 8,
   **characterised in that,**
   in the case of square allocation and a calculation of the reliability characteristic from additively-linked symbol probabilities ($p(S_m|z)$) and a transmission channel with a metric ($D_m$) capable of being analysed into a horizontal metric ($H_m$) and a vertical metric ($V_m$), the log-likelihood ratio ($L_L(u_k)$) of the received bit ($u_k$) can be calculated according to the following formula:

$$L_L(u_k) = \log\left( \sum_{\substack{n=1 \\ u_k=0}}^{K} \exp(-\frac{(y-y_n)^2}{\sigma^2}) \right) - \log\left( \sum_{\substack{n=1 \\ u_k=1}}^{K} \exp(-\frac{(y-y_n)^2}{\sigma^2}) \right)$$

10. Method for determining a reliability characteristic according to claim 8,
    **characterised in that,**
    in the case of a square allocation and a calculation of the reliability characteristic from additively-linked symbol probabilities ($p(S_m|z)$) and a transmission channel with a metric ($D_m$) capable of being analysed into a horizontal metric ($H_m$) and a vertical metric ($V_m$), the log-likelihood ratio ($L_L(u_k)$) of the received bit ($u_k$) can be calculated according to the following formula:

$$L_L(u_k) = \log\left( \sum_{\substack{n=1 \\ u_k=0}}^{K} \exp(-\frac{(x-x_n)^2}{\sigma^2}) \right) - \log\left( \sum_{\substack{n=1 \\ u_k=1}}^{K} \exp(-\frac{(x-x_n)^2}{\sigma^2}) \right)$$

11. Method for determining a reliability characteristic according to claim 8,
    **characterised in that,**

in the case of a square allocation and a transmission channel with a metric ($D_m$) capable of being analysed into a horizontal metric ($H_m$) and a vertical metric ($V_m$), and with a calculation of the reliability characteristic from maximal symbol probabilities ($p(S_m|z)$), the log-likelihood ratio ($L_{ML}(u_k)$) of the received bit ($u_k$) can be calculated according to the following formula:

$$L_{ML}(u_k) = \max_{n=1...K|u_k=0}\left\{-\frac{(y-y_n)^2}{\sigma^2}\right\} - \max_{n=1...K|u_k=1}\left\{-\frac{(y-y_n)^2}{\sigma^2}\right\}$$

12. Method for determining a reliability characteristic according to claim 8,
   **characterised in that,** in the case of a square allocation and a transmission channel with a metric ($D_m$) capable of being analysed into a horizontal metric ($H_m$) and a vertical metric ($V_m$), and with a calculation of the reliability characteristic from maximal symbol probabilities ($p(S_m|z)$), the log-likelihood ratio ($L_{ML}(u_k)$) of the received bit ($u_k$) can be calculated according to the following formula:

$$L_{ML}(u_k) = \max_{n=1...K|u_k=0}\left\{-\frac{(x-x_n)^2}{\sigma^2}\right\} - \max_{n=1...K|u_k=1}\left\{-\frac{(x-x_n)^2}{\sigma^2}\right\}$$

13. Method for determining a reliability characteristic according to any one of claims 1 to 12,
   **characterised in that,**
   in the case of a square allocation and a transmission channel with a metric ($D_m$) capable of being analysed into a horizontal metric ($H_m$) and a vertical metric ($V_m$), a log, horizontal, a-priori symbol probability ($N_m$) is added to the horizontal, log symbol probability ($P_m$), and a log, vertical, a-priori symbol probability ($N_m$) is added to the vertical, log symbol probability ($Q_m$).

14. Method for determining a reliability characteristic according to claim 13,
   **characterised in that**
   the log, vertical, a-priori symbol probability ($M_m$) is calculated from log, a-priori bit probabilities ($L_A(u_k)$) of those bits ($u_k$) of the reference symbol ($S_m$), which are determinant and activated for the respective line of reference symbols ($S_m$) in the constellation diagram, and the log, horizontal, a-priori symbol probability ($N_m$) is calculated from log, a-priori bit probabilities ($L_A(u_k)$) of those bits ($u_k$) of the reference symbol ($S_m$), which are determinant and activated for the respective column of reference symbols ($S_m$) in the constellation diagram.

15. Method for determining a reliability characteristic according to any one of claims 1 to 14,
   **characterised in that**
   the transmission channel with a metric ($D_m$) capable of being analysed into a horizontal metric ($H_m$) and a vertical metric ($V_m$) is a transmission channel with a superimposed white Gaussian noise.

16. Method for determining a reliability characteristic according to any one of claims 1 to 15,
   **characterised in that**
   the reliability characteristic regarding the status of a received bit ($u_k$) in the k-th bit position of a received symbol ($z$) is an extrinsic log-likelihood ratio ($L_E(u_k), L_{EL}(u_k)$) of the received bit ($u_k$), which is obtained from a subtraction of the log, a-priori bit probability ($L_A(u_k)$) of the respective bit ($u_k$) from the log-likelihood ratio $L'_L(u_k)$ of the received bit ($u_k$) at the output of a partial decoder of an iterative decoder.

17. Device for determining a reliability characteristic for a status of a received bit ($u_k$) in a received symbol ($z$) of a communications signal coded with a modulation, consisting of a demapper (2) for the determination in each case of a metric ($D_m$) between the received symbol ($z$) and each of the reference symbols ($S_m$) used in the modulation, and a decoder (3; 3') for the determination of the log-likelihood ratio ($L_L(u_k), L_{ML}(u_k); L_L'(u_k), L_{ML}'(u_k)$) for every bit ($u_k$) of the received symbol ($z$), wherein the metric ($D_m$) consists of a horizontal metric ($H_m$) and a vertical metric ($V_m$) of the received symbol ($z$) relative to the respective reference symbol ($S_m$),
   **characterised in that**
   the allocation of the individual reference symbols ($S_m$) in the constellation diagram is a square allocation, in which

the reference symbols ($S_m$) in the same line or the same column are identical in half of the bits ($u_k$), and the decoder is designed in such a manner to determine a number corresponding to the line number in the constellation diagram of log symbol probabilities ($Q_m$) dependent upon the vertical metric ($V_m$) and a number corresponding to the column number in the constellation diagram of log symbol probabilities ($P_m$) dependent upon the horizontal metric ($H_m$).

18. Iterative decoder consisting of a first partial decoder (3; 3') and a second partial decoder (4) for the determination in each case of a reliability characteristic ($L_1(u_k),L_2(u_k)$) for a bit ($u_k$) in a received symbol ($z$), wherein the first or respectively second partial decoder (3; 3', 4) in each case determines the reliability characteristic ($L_1(u_k),L_2(u_k)$) for the bit ($u_k$) in the received symbol ($z$) from the bit ($u_k$) in the received symbol ($z$) and a reliability characteristic ($L_{A2}(u_k),L_{A1}(u_k)$) for the bit ($u_k$) in the received symbol ($z$) determined by the second or respectively first partial decoder,
**characterised in that**
the first partial decoder (3; 3') is a device for determining a reliability characteristic ($L_1(u_k)$) according to claim 17, wherein the reliability characteristic ($L_1(u_k)$) is a log-likelihood ratio ($L_L(u_k),L_{ML}(u_k);L_L'(u_k),L_{ML}'(u_k)$).

19. Iterative decoder according to claim 18,
**characterised in that**
a first subtractor (5) subtracts a reliability characteristic ($L_{A2}(u_k)$) for the bit ($u_k$) in the received symbol ($z$) determined by the second partial decoder (4) from the reliability characteristic (($L_L(u_k),L_{ML}(u_k);L_L'(u_k),L_{ML}'(u_k)$)) for the bit ($u_k$) in the received symbol ($z$) determined by the first partial decoder (3, 3'), and a second subtractor (7) subtracts the reliability characteristic ($L_{A1}(u_k)$) for the bit ($u_k$) in the received symbol ($z$) determined by the first partial decoder (4) from the reliability characteristic ($L_2(u_k)$) determined by the second partial decoder (4).

## Revendications

1. Procédé de détection d'une information de fiabilité concernant un état d'un bit reçu ($u_k$) d'un signal de télécommunication avec une position de bit (k) dans un symbole de réception (z) codé par une modulation,
dans lequel une vraisemblance de symbole ($p(S_m|z)$) du symbole de réception (z) pour chaque symbole de référence ($S_m$) de la modulation est calculée à l'aide d'une métrique ($D_m$) entre le symbole de réception (z) et le symbole de référence correspondant ($S_m$) et dans lequel l'information de fiabilité est un rapport logarithmique de vraisemblance ($L_1(u_k), L_{ML}(u_k); L_L'(u_k), L_{ML}'(u_k)$) du bit reçu ($u_k$) et est calculée à partir d'une différence entre les vraisemblances de symbole liées par addition *(p($S_m|u_k$=1)* dont le symbole de référence ($S_m$) présente un bit ($u_k$) avec un état activé sur la position de bit (k) et les vraisemblances de symbole liées par addition (*p($s_m|u_k$=0)* dont le symbole de référence ($S_m$) présente un bit ($u_k$) avec un état non activé sur la position de bit (k),
la métrique correspondante ($D_m$) se composant d'un métrique horizontale ($H_m$) et d'une métrique verticale ($V_m$) du symbole de réception (z) par rapport au symbole de référence respectif ($S_m$) et
la vraisemblance de symbole *(p($S_m|z$))* se composant d'une vraisemblance logarithmique de symbole ($P_m$) dépendant de la métrique horizontale ($H_m$) et d'une vraisemblance logarithmique de symbole ($Q_m$) dépendant de la métrique verticale ($V_m$),
**caractérisé en ce**
**que** la correspondance des différents symboles de référence individuels ($S_m$) dans le diagramme de constellation est une correspondance quadratique dans laquelle les symboles de référence ($S_m$) dans la même ligne ou dans la même colonne sont identiques sur la moitié des bits ($u_k$) et en ce qu'on détermine un nombre de vraisemblances logarithmiques de symbole ($Q_m$) en fonction de la métrique verticale ($V_m$) correspondant au nombre de lignes dans le diagramme de constellation de même qu'un nombre de vraisemblances logarithmiques de symbole ($P_m$) en fonction de la métrique horizontale ($H_m$) correspondant au nombre de colonnes dans le diagramme de constellation.

2. Procédé de détection d'une information de fiabilité concernant un état d'un bit reçu ($u_k$) d'un signal de télécommunication avec une position de bit (k) dans un symbole (z) de réception codé par une modulation,
dans lequel une vraisemblance de symbole *(p($S_m|z$))* du symbole de réception (z) pour chaque symbole de référence ($S_m$) de la modulation est calculée à l'aide d'une métrique ($D_m$) entre le symbole de réception (z) et le symbole de référence correspondant *(Sm)* et dans lequel l'information de fiabilité est un rapport de vraisemblance de connexion *(LL($u_k$), L_{ML}($u_k$) ; L_L'($u_k$), L_{ML}'($u_k$))* du bit reçu ($u_k$) et est calculée à partir d'une différence entre la vraisemblance de symbole maximale ($p(S_m|u_k$=1)$) à partir de toutes les vraisemblances de symbole ($p(S_m|u_k$=1)$) dont le symbole de référence ($S_m$) sur la position de bit (k) présente un bit ($u_k$) avec un état activé et la vraisemblance de symbole maximale ($p(S_m|u_k$=0)$) à partir de toutes les vraisemblances de symbole associées *(p($S_m|u_k$=0))* dont le symbole de référence ($S_m$) sur la position de bit (k) présente un bit ($u_k$) avec un état non activé,
la métrique correspondante ($D_m$) se composant d'une métrique horizontale ($H_m$) et d'une métrique verticale ($V_m$)

du symbole de réception (z) par rapport au symbole de référence respectif ($S_m$) et
la vraisemblance de symbole *(p($S_m$|z))* se composant d'une vraisemblance logarithmique de symbole ($P_m$) dépendant de la métrique horizontale *(Hm)* et d'une vraisemblance logarithmique de symbole ($Q_m$) dépendant de la métrique verticale (*Vm*),

**caractérisé en ce**

**que** la correspondance des différents symboles de référence *(Sm)* dans le diagramme de constellation est une correspondance quadratique dans laquelle les symboles de référence ($S_m$) dans la même ligne ou dans la même colonne sont identiques sur la moitié des bits ($u_k$) et en ce qu'on détecte un nombre de vraisemblances logarithmiques de symbole ($Q_m$) en fonction de la métrique verticale ($V_m$) correspondant au nombre de lignes dans le diagramme de constellation de même qu'un nombre de vraisemblances logarithmiques de symbole ($P_m$) en fonction de la métrique horizontale ($H_m$) correspondant au nombre de colonnes dans le diagramme de constellation.

**3.** Procédé de détection d'une information de fiabilité selon la revendication 1 ou 2,
**caractérisé en ce**
**que** la correspondance est une correspondance de bit de type Gray.

**4.** Procédé de détection d'une information de fiabilité selon l'une quelconque des revendications 1 à 3,
**caractérisé en ce**
**que** le rapport de vraisemblance de connexion ($L_L(u_k)$) du bit reçu ($u_k$) se calcule dans le cas d'une correspondance quadratique et d'un calcul de l'information de fiabilité à partir de vraisemblances de symbole liées par addition (*p($S_m$|z)*) conformément à la formule suivante :

$$L_L(u_k) = \log\left(\sum_{n=1|b_k=0}^{K} \exp(\log(f(H_n)))\right) - \log\left(\sum_{n=1|b_k=1}^{K} \exp(\log(f(H_n)))\right)$$

*f($H_n$)* étant la fonction pour le calcul de la vraisemblance $P_n$ du symbole de réception z en fonction de la métrique horizontale $H_m$ par rapport à la colonne des symboles de référence $S_n$ dans le diagramme de constellation et K étant le nombre de colonnes du diagramme de constellation.

**5.** Procédé de détection d'une information de fiabilité selon l'une quelconque des revendications 1 à 4,
**caractérisé en ce**
**que** le rapport de vraisemblance de connexion ($L_L(u_k)$) du bit reçu ($u_k$) se calcule dans le cas de la correspondance quadratique et d'un calcul de l'information de fiabilité à partir de vraisemblances de symbole liées par addition (*p($S_m$|z)*) conformément à la formule suivante :

$$L_L(u_k) = \log\left(\sum_{n=1|b_k=0}^{K} \exp(\log(f(V_n)))\right) - \log\left(\sum_{m=1|b_k=1}^{K} \exp(\log(f(V_n)))\right)$$

*f($V_n$)* étant la fonction pour le calcul de la vraisemblance de symbole ($Q_m$) du symbole de réception z en fonction de la métrique verticale ($V_m$) par rapport à la ligne des symboles de référence $S_n$ dans le diagramme de constellation et K étant le nombre de lignes du diagramme de constellation.

**6.** Procédé de détection d'une information de fiabilité selon l'une quelconque des revendications 1 à 5,
**caractérisé en ce**
**que** le rapport de vraisemblance de connexion ($L_{ML}(u_k)$) du bit reçu ($u_k$) se calcule dans le cas de la correspondance quadratique et d'un calcul de l'information de fiabilité à partir des vraisemblances de symbole maximales (*p($S_m$|z)*) conformément à la formule suivante :

$$L_{ML}(u_k) = \max_{n=1...K|u_k=0}\left\{\log(f(H_n)\right\} - \max\left\{\log_{n=1...K|u_k=1}(f(H_n)\right\}$$

**7.** Procédé de détection d'une information de fiabilité selon l'une quelconque des revendications 1 à 5, **caractérisé en ce**
**que** le rapport de vraisemblance de connexion ($L_{mL}(u_k)$) du bit reçu ($u_k$) se calcule dans le cas de la correspondance quadratique et d'un calcul de l'information de fiabilité à partir des vraisemblances de symbole maximales ($p(S_m|z)$) conformément à la formule suivante :

$$L_{ML}(u_k) = \max_{n=1...K|u_k=0}\left\{\log(f(V_n))\right\} - \max_{n=1...K|u_k=1}\left\{\log(f(V_n))\right\}$$

**8.** Procédé de détection d'une information de fiabilité selon l'une quelconque des revendications 1 à 7, **caractérisé en ce**
**que,** dans un canal de transmission dans lequel la métrique ($D_m$) peut être fractionnée en une métrique horizontale ($H_m$) et en une métrique verticale ($V_m$), la métrique horizontale ($H_m$) représente la distance euclidienne horizontale (($x-x_m$)$^2$) du symbole reçu par rapport à une ligne de symboles de référence ($S_m$) et en ce que la métrique verticale ($V_m$) représente la distance euclidienne verticale ($y-y_m$)2 du symbole reçu (z) par rapport à une colonne de symboles de référence ($S_m$) dans le diagramme de constellation,
x étant la coordonnée réelle du symbole de réception z dans le diagramme de constellation,
$X_m$ étant la coordonnée réelle du symbole de référence $S_m$ dans le diagramme de constellation,
y étant la coordonnée imaginaire du symbole de réception z dans le diagramme de constellation et
$y_m$ étant la coordonnée imaginaire du symbole de référence $S_m$ dans le diagramme de constellation.

**9.** Procédé de détection d'une information de fiabilité selon la revendication 8, **caractérisé en ce que,** dans le cas d'une correspondance quadratique et d'un calcul de l'information de fiabilité à partir des vraisemblances de symbole liées par addition ($P(S_m|z)$) et d'un canal de transmission avec une métrique ($D_m$) pouvant être fractionnée en une métrique horizontale ($H_m$) et en une métrique verticale ($V_m$), on calcule le rapport logarithmique de vraisemblance ($L_L(u_k)$) du bit reçu ($u_k$) conformément à la formule suivante :

$$L_L(u_k) = \log\left(\sum_{\substack{n=1\\u_k=0}}^{K}\exp(-\frac{(y-y_n)^2}{\sigma^2})\right) - \log\left(\sum_{\substack{n=1\\u_k=1}}^{K}\exp(-\frac{(y-y_n)^2}{\sigma^2})\right)$$

**10.** Procédé de détection d'une information de fiabilité selon la revendication 8, **caractérisé en ce que,** dans le cas d'une correspondance quadratique et d'un calcul de l'information de fiabilité à partir des vraisemblances de symbole liées par addition ($p(S_m|z)$) et d'une voie de transmission avec une métrique ($D_m$) pouvant être fractionnée en une métrique horizontale ($H_m$) et en une métrique verticale ($V_m$), on calcule le rapport logarithmique de vraisemblance ($L_L(u_k)$) du bit reçu ($u_k$) conformément à la formule suivante :

$$L_L(u_k) = \log\left(\sum_{\substack{n=1\\u_k=0}}^{K}\exp(-\frac{(x-x_n)^2}{\sigma^2})\right) - \log\left(\sum_{\substack{n=1\\u_k=1}}^{K}\exp(-\frac{(x-x_n)^2}{\sigma^2})\right)$$

**11.** Procédé de détection d'une information de fiabilité selon la revendication 8, **caractérisé en ce que,** dans le cas d'une correspondance quadratique et d'une voie de transmission avec une métrique ($D_m$) pouvant être fractionnée en une métrique horizontale ($H_m$) et en une métrique verticale ($V_m$) et dans celui d'un calcul de l'information de fiabilité à partir des vraisemblances de symbole maximales ($p(S_m|z)$), on calcule le rapport de vraisemblance loga-

rithmique ($L_{ML}(u_k)$) du bit reçu ($u_k$) conformément à la formule suivante :

$$L_{ML}(u_k) = \max_{n=1\ldots K|u_k=0}\left\{-\frac{(y-y_n)^2}{\sigma^2}\right\} - \max_{n=1\ldots K|u_k=1}\left\{-\frac{(y-y_n)^2}{\sigma^2}\right\}$$

**12.** Procédé de détection d'une information de fiabilité selon la revendication 8, **caractérisé en ce que,** dans le cas d'une correspondance quadratique et d'une voie de transmission avec une métrique ($D_m$) pouvant être fractionnée en une métrique horizontale ($H_m$) et en une métrique verticale ($V_m$) et dans celui d'un calcul de l'information de fiabilité à partir des vraisemblances de symbole maximales ($p(S_m|z)$), on calcule le rapport de vraisemblance logarithmique $(L_{ML}(u_k))$ du bit reçu ($u_k$) conformément à la formule suivante :

$$L_{ML}(u_k) = \max_{n=1\ldots K|u_k=0}\left\{-\frac{(x-x_n)^2}{\sigma^2}\right\} - \max_{n=1\ldots K|u_k=1}\left\{-\frac{(x-x_n)^2}{\sigma^2}\right\}$$

**13.** Procédé de détection d'une information de fiabilité selon l'une quelconque des revendications 1 à 12, **caractérisé en ce que,** dans le cas d'une correspondance quadratique et d'une voie de transmission avec une métrique ($D_m$) pouvant être fractionnée en une métrique horizontale ($H_m$) et en une métrique verticale ($V_m$), on calcule une vraisemblance logarithmique de symbole horizontale a priori ($N_m$) par rapport à une vraisemblance logarithmique de symbole horizontale ($P_m$) et **en ce qu'**on ajoute une vraisemblance logarithmique de symbole verticale a priori ($N_m$) à la vraisemblance logarithmique de symbole ($Q_m$) verticale.

**14.** Procédé de détection d'une information de fiabilité selon la revendication 13, **caractérisé en ce que** la vraisemblance logarithmique de symbole verticale a priori ($Mm$) est calculée à partir des vraisemblances logarithmiques de bit a priori ($L_A(u_k)$) des bits respectifs ($u_k$) du symbole de référence ($S_m$) qui sont activés et déterminants pour la ligne respective de symboles de référence ($S_m$) dans le diagramme de constellation et en ce que la vraisemblance logarithmique de symbole horizontale a priori ($N_m$) est calculée à partir des vraisemblances logarithmiques de bit a priori $(L_A(u_k)$ des bits respectifs ($u_k$) du symbole de référence qui sont activés et déterminants pour la colonne respective des symboles de référence ($S_m$) dans le diagramme de constellation.

**15.** Procédé de détection d'une information de fiabilité selon l'une quelconque des revendications 1 à 14, **caractérisé en ce que** le canal de transmission avec une métrique ($D_m$) pouvant être divisé en une métrique horizontale ($H_m$) et en une métrique verticale ($V_m$) est un canal de transmission brouillé avec un bruit blanc gaussien.

**16.** Procédé de détection d'une information de fiabilité selon l'une quelconque des revendications 1 à 15, **caractérisé en ce que** l'information de fiabilité sur l'état d'un bit reçu ($u_k$) dans la $_k$tième position de bit d'un symbole de réception (z) est un rapport logarithmique de vraisemblance extrinsèque ($L_E(u_k)$, $L_{EL}(u_k)$) du bit reçu ($u_k$) qui résulte d'une soustraction de la vraisemblance logarithmique de bit a priori $(L_A(u_k))$ du bit correspondant ($u_k$) du rapport logarithmique de vraisemblance $(L'_L(u_k))$ du bit reçu ($u_k$) à la sortie d'un décodeur partiel d'un décodeur itératif.

**17.** Dispositif de détection d'une information de fiabilité concernant un état d'un bit reçu ($u_k$) dans un symbole de réception (z) codé par une modulation d'un signal de télécommunication, composé d'un démappeur (2) pour détecter respectivement une métrique ($Dm$) entre le symbole de réception (z) et celui des symboles de référence ($S_m$) utilisés dans la modulation ainsi que d'un décodeur (3 ; 3') pour détecter un rapport de vraisemblance de connexion ($L_L(u_k)$, $L_{ML}(u_k)$; $L_L'(u_k)$, $L_{ML}'(u_k)$) pour chaque bit ($u_k$) du symbole de réception (z), la métrique ($D_m$) se composant d'une métrique horizontale ($H_m$) et d'une métrique verticale ($V_m$) du symbole de réception (z) par rapport au symbole de référence respectif ($S_m$), **caractérisé en ce que** la correspondance des différents symboles de référence ($S_m$) dans le diagramme de constellation est une correspondance quadratique pour laquelle les symboles de référence ($S_m$) dans la même ligne ou dans la même colonne sont identiques sur la moitié des bits ($u_k$) et en ce que le décodeur est conçu de manière à déterminer un nombre de vraisemblances logarithmiques de symbole ($Q_m$) en fonction de la métrique verticale ($V_m$) correspondant au nombre de lignes dans le diagramme de constellation et un nombre de vraisemblances logarithmiques de symbole ($P_m$) en fonction de la métrique horizontale ($H_m$) correspondant au nombre de colonnes dans le diagramme de constellation.

18. Décodeur itératif composé d'un premier décodeur partiel (3 ; 3') et d'un deuxième décodeur partiel (4) pour détecter respectivement une information de fiabilité ($L_1(u_k)$, $L_2(u_k)$) concernant un bit ($u_k$) dans un symbole de réception (z), le premier et/ou le deuxième décodeur (3 ; 3', 4) détectant respectivement l'information de fiabilité ($L_1(u_k)$, $L_2(u_k)$) par le bit ($u_k$) dans le symbole reçu (z) à partir du bit ($u_k$) dans le symbole reçu (z) et à partir d'une information de fiabilité ($L_{A2}(u_k)$, $L_{A1}$-$(u_k)$) déterminée par le deuxième et/ou le premier décodeur partiel concernant le bit ($u_k$) dans le symbole reçu (z),
**caractérisé en ce**
**que** le premier décodeur partiel (3 ; 3') est un dispositif d'évaluation d'une information de fiabilité ($L_1(u_k)$) suivant la revendication 17, l'information de fiabilité ($L_1(u_k)$) étant un rapport logarithmique de vraisemblance ($L_L(u_k)$, $L_{ML}(u_k)$; $L_L'(u_k)$, $L_{ML}'(u_k)$).

19. Décodeur itératif selon la revendication 18,
**caractérisé en ce**
**qu'**un premier soustracteur (5) soustrait de l'information de fiabilité ($L_L(u_k)$, $L_{ML}(u_k)$ ; $L_L'(u_k)$, $L_{ML}'(u_k)$) concernant le bit ($u_k$) dans le symbole de réception (z) une information de fiabilité ($L_{A2}(u_k)$) évaluée par le deuxième décodeur partiel (4) concernant le bit ($u_k$) dans le symbole de réception (z) et en ce qu'un deuxième soustracteur (7) soustrait de l'information de fiabilité ($L_2(u_k)$) détectée par le deuxième soustracteur partiel (4) l'information de fiabilité ($L_{A1}(u_k)$) détectée par le premier décodeur partiel (4).

Fig. 1A

Fig. 1B

Fig. 1C

Empfangenes
Symbol

D₁ D₂ D₃ D₄

Referenz-
Symbole

D₅ D₆ D₇ D₈

D₉ D₁₀ D₁₁ D₁₂

D₁₃ D₁₄ D₁₅ D₁₆

Fig. 2

H₁
H₂
H₄ H₃

Empfangenes
Symbol

V₁
V₂
V₃
V₄

Referenz-
Symbole

Fig. 3A

$V_1$    $V_1$    $V_1$    $V_1$
$+H_4$   $+H_3$   $+H_2$   $+H_1$

$V_2$    $V_2$    $V_2$    $V_2$
$+H_4$   $+H_3$   $+H_2$   $+H_1$

$V_3$    $V_3$    $V_3$    $V_3$
$+H_4$   $+H_3$   $+H_2$   $+H_1$

$V_4$    $V_4$    $V_4$    $V_4$
$+H_4$   $+H_3$   $+H_2$   $+H_1$

## Fig. 3B

$u_1 = 0$:     $u_2 = 0$:     $u_3 = 0$:     $u_4 = 0$:

## Fig. 4

$N_4$     $N_3$     $N_2$     $N_1$

XX(10)    XX(11)    XX(01)    XX(00)    $M_1$

(00)XX

(01)XX   $M_2$

(11)XX   $M_3$

(10)XX   $M_4$

**Fig. 5**

| $P_4+N_4$ $Q_1+M_1$ | $P_3+N_3$ $Q_1+M_1$ | $P_2+N_2$ $Q_1+M_1$ | $P_1+N_1$ $Q_1+M_1$ |
|---|---|---|---|
| $P_4+N_4$ $Q_2+M_2$ | $P_3+N_3$ $Q_2+M_2$ | $P_2+N_2$ $Q_2+M_2$ | $P_1+N_1$ $Q_2+M_2$ |
| $P_4+N_4$ $Q_3+M_3$ | $P_3+N_3$ $Q_3+M_3$ | $P_2+N_2$ $Q_3+M_3$ | $P_1+N_1$ $Q_3+M_3$ |
| $P_4+N_4$ $Q_4+M_4$ | $P_3+N_3$ $Q_4+M_4$ | $P_2+N_2$ $Q_4+M_4$ | $P_1+N_1$ $Q_4+M_4$ |

**Fig. 6**

| Symbol | Bit Zuordnung | Logarithmierte Symbol-Wahr- scheinlichkeit f. volle Metrik |
|---|---|---|
| $S_1$ | 0000 | $0$ |
| $S_2$ | 0001 | $-L_A(u_4)$ |
| $S_3$ | 0010 | $-L_A(u_3)$ |
| $S_4$ | 0011 | $-L_A(u_3) - L_A(u_4)$ |
| $S_5$ | 0100 | $-L_A(u_2)$ |
| $S_6$ | 0101 | $-L_A(u_2) - L_A(u_4)$ |
| . . . | . . . | . . . |
| $S$ | 1111 | $-L_A(u_1) - L_A(u_2) - L_A(u_3) - L_A(u_4)$ |

## Fig. 7

| Symbol | Bit Zuordnung | Logarithmierte Symbol-Wahr- scheinlichkeit f. symmetr. Metrik |
|---|---|---|
| $S_1$ | 0000 | $\dfrac{L_A(u_1) + L_A(u_2) + L_A(u_3) + L_A(u_4)}{2}$ |
| $S_2$ | 0001 | $\dfrac{L_A(u_1) + L_A(u_2) + L_A(u_3) - L_A(u_4)}{2}$ |
| $S_3$ | 0010 | $\dfrac{L_A(u_1) + L_A(u_2) - L_A(u_3) + L_A(u_4)}{2}$ |
| $S_4$ | 0011 | $\dfrac{L_A(u_1) + L_A(u_2) - L_A(u_3) - L_A(u_4)}{2}$ |
| $S_5$ | 0100 | $\dfrac{L_A(u_1) - L_A(u_2) + L_A(u_3) + L_A(u_4)}{2}$ |
| $S_6$ | 0101 | $\dfrac{L_A(u_1) - L_A(u_2) + L_A(u_3) - L_A(u_4)}{2}$ |
| . . . | . . . | . . . |
| $S$ | 1111 | $\dfrac{-L_A(u_1) - L_A(u_2) - L_A(u_3) - L_A(u_4)}{2}$ |

## Fig. 8

| Volle Metrik | Symmetrische Metrik |
|---|---|
| $M_1 = 0$ | $M_1 = \dfrac{L_A(u_1) + L_A(u_2)}{2}$ |
| $M_2 = -L_A(u_2)$ | $M_2 = \dfrac{L_A(u_1) - L_A(u_2)}{2}$ |
| $M_3 = -L_A(u_1) - L_A(u_2)$ | $M_3 = -\dfrac{L_A(u_1) + L_A(u_2)}{2}$ |
| $M_4 = -L_A(u_1)$ | $M_4 = -\dfrac{L_A(u_1) - L_A(u_2)}{2}$ |
| $N_1 = 0$ | $N_1 = \dfrac{L_A(u_3) + L_A(u_4)}{2}$ |
| $N_2 = -L_A(u_4)$ | $N_2 = \dfrac{L_A(u_3) - L_A(u_4)}{2}$ |
| $N_3 = -L_A(u_3) - L_A(u_4)$ | $N_3 = -\dfrac{L_A(u_3) + L_A(u_4)}{2}$ |
| $N_4 = -L_A(u_3)$ | $N_4 = -\dfrac{L_A(u_3) - L_A(u_4)}{2}$ |

Fig. 9

| Metriken | |
|---|---|
| $V_1 = (z_I - \upsilon_1)^2$ | $H_1 = (z_R - \upsilon_1)^2$ |
| $V_2 = (z_I - \upsilon_2)^2$ | $H_2 = (z_R - \upsilon_2)^2$ |
| $V_3 = (z_I - \upsilon_3)^2$ | $H_3 = (z_R - \upsilon_3)^2$ |
| $V_4 = (z_I - \upsilon_4)^2$ | $H_4 = (z_R - \upsilon_4)^2$ |

Fig. 10A

| Metriken | |
|---|---|
| $V_1 = z_I{}^2 - 6 \cdot z_I \cdot \Delta + 9 \cdot \Delta^2$ | $H_1 = z_R{}^2 - 6 \cdot z_R \cdot \Delta + 9 \cdot \Delta^2$ |
| $V_2 = z_I{}^2 - 2 \cdot z_I \cdot \Delta + \Delta^2$ | $H_2 = z_R{}^2 - 2 \cdot z_R \cdot \Delta + \Delta^2$ |
| $V_3 = z_I{}^2 + 2 \cdot z_I \cdot \Delta + \Delta^2$ | $H_3 = z_R{}^2 + 2 \cdot z_R \cdot \Delta + \Delta^2$ |
| $V_4 = z_I{}^2 + 6 \cdot z_I \cdot \Delta + 9 \cdot \Delta^2$ | $V_4 = z_R{}^2 + 6 \cdot z_R \cdot \Delta + 9 \cdot \Delta^2$ |

Fig. 10B

| Metriken | |
|---|---|
| $V_1 = -6 \cdot z_I \cdot \Delta + 8 \cdot \Delta^2$ | $H_1 = -6 \cdot z_R \cdot \Delta + 8 \cdot \Delta^2$ |
| $V_2 = -2 \cdot z_I \cdot \Delta$ | $H_2 = -2 \cdot z_R \cdot \Delta$ |
| $V_3 = 2 \cdot z_I \cdot \Delta$ | $H_3 = 2 \cdot z_R \cdot \Delta$ |
| $V_4 = 6 \cdot z_I \cdot \Delta + 8 \cdot \Delta^2$ | $H_4 = 6 \cdot z_R \cdot \Delta + 8 \cdot \Delta^2$ |

## Fig. 10C

```
        ┌─────────┐
        │  Start  │
        └─────────┘
             │
             ▼
```

S10 —
Ermitteln der reellen und imaginären Komponente $z_R$ u. $z_I$
des empfangenen Symbols S im Konstellationsdiagramm

S20 —
Berechnen der horizontalen und vertikalen Metrik $H_m$ und $V_m$
sowie der horizontalen und vertikalen Symbol-Wahrscheinlichkeit
$P_m$ und $Q_m$ des empfangenen Symbols S zu jedem Referenz-Symbol
$S_m$ der Modulation im Konstellationsdiagramm

S30 —
Ermitteln der LLR-Werte $L(u_k)$ für jedes Bit $u_k$ des
empfangenen Symbols in der Logarithmus-Ebene oder
mittels Max-Log-Annäherung

```
        ┌─────────┐
        │  Ende   │
        └─────────┘
```

## Fig. 11A

Start

S100 — Ermitteln der reellen und imaginären Komponente $z_R$ und $z_I$ des empfangenen Symbols S im Konstellationsdiagramm

S110 — Berechnen der horizontalen und vertikalen Metrik $H_m$ und $V_m$ sowie der horizontalen und vertikalen Symbol-Wahrscheinlichkeit $P_m$ und $Q_m$ des empfangenen Symbols S zu jedem Referenz-Symbol $S_m$ der Modulation im Konstellationsdiagramm

S120 — Ermitteln der Logarithmierten horizontalen und vertikalen a-priori-Symbol-Wahrscheinlichkeiten $N_m$ und $M_m$ für jedes Referenz-Symbol $S_m$ der Modulation aus den a-priori-Bit-Wahrscheinlichkeiten $L_A (u_k)$ für jedes Bit $u_k$ des empfangenen Symbols

S130 — Addieren der horizontalen Symbol-Wahrscheinlichkeiten $P_m$ zu der horizontalen a-priori-Symbol-Wahrscheinlichkeiten $N_m$ sowie der vertikalen Symbol-Wahrscheinlichkeiten $Q_m$ zu der vertikalen a-priori-Symbol-Wahrscheinlichkeiten $M_m$

S140 — Ermitteln der LLR-Werte $L'(u_k)$ für jedes Bit $u_k$ des empfangenen Symbols in der Logarithmus-Ebene oder mittels Max-Log-Annäherung

S150 — Ermitteln der extrinsischen Logarithmierten Bit-Wahrscheinlichkeiten $L_E (u_k)$ für jedes Bit $u_k$ des empfangenen Symbols S aus den horizontalen und vertikalen Symbol-Wahrscheinlichkeiten $P_m$ und $Q_m$ und den a-priori-Bit-Wahrscheinlichkeiten $L_A(u_k)$ für jedes Bit $u_k$ des empfangenen Symbols S

Ende

Fig. 11B

Detektor 1

**Fig. 12A**

Detektor 1'

**Fig. 12B**

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6807238 B1
- EP 0998045 A